(19) Europäisches Patentamt / European Patent Office / Office européen des brevets

(11) **EP 4 055 912 B1**

(12) **EUROPEAN PATENT SPECIFICATION**

(45) Date of publication and mention
of the grant of the patent:
**08.04.2026 Bulletin 2026/15**

(21) Application number: **19951596.6**

(22) Date of filing: **04.11.2019**

(51) International Patent Classification (IPC):
*H04W 52/34* (2009.01)   *H04W 52/36* (2009.01)

(52) Cooperative Patent Classification (CPC):
**H04W 52/346;** H04W 52/367

(86) International application number:
**PCT/CN2019/115424**

(87) International publication number:
**WO 2021/087689 (14.05.2021 Gazette 2021/19)**

(54) **METHOD, DEVICE AND COMPUTER READABLE MEDIUM OF DATA TRANSMISSION**

VERFAHREN, VORRICHTUNG UND COMPUTERLESBARES MEDIUM ZUR DATENÜBERTRAGUNG

PROCÉDÉ, DISPOSITIF ET SUPPORT LISIBLE PAR ORDINATEUR DE TRANSMISSION DE DONNÉES

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(43) Date of publication of application:
**14.09.2022 Bulletin 2022/37**

(73) Proprietor: **Nokia Technologies Oy**
**02610 Espoo (FI)**

(72) Inventor: **GUO, Haiyou**
**Shanghai 201206 (CN)**

(74) Representative: **DREISS Patentanwälte PartG mbB**
**Friedrichstraße 6**
**70174 Stuttgart (DE)**

(56) References cited:
**CN-A- 101 980 467   CN-A- 102 333 368**
**CN-A- 107 231 684   US-A1- 2013 266 054**

US-B1- 6 400 773   US-B1- 7 310 301

- CHIH-YU HSU ET AL: "Coordinated multi-point transmission of MIMO-OFDM system with per-antenna power constraints", GLOBAL COMMUNICATIONS CONFERENCE (GLOBECOM), 2012 IEEE, IEEE, 3 December 2012 (2012-12-03), pages 4886 - 4892, XP032375450, ISBN: 978-1-4673-0920-2, DOI: 10.1109/GLOCOM.2012.6503893
- PRINCE K ET AL: "A framework for efficient rate-power allocation for OFDM in a composite-fading environment", COMMUNICATIONS, 2005. ICC 2005. 2005 IEEE INTERNATIONAL CONFERENCE ON SEOUL, KOREA 16-20 MAY 2005, PISCATAWAY, NJ, USA,IEEE, vol. 4, 16 May 2005 (2005-05-16), pages 2558 - 2562, XP010825649, ISBN: 978-0-7803-8938-0, DOI: 10.1109/ICC.2005.1494811

**Description**

**FIELD**

Embodiments of the present disclosure generally relate to the field of telecommunication and in particular, to methods, devices and computer readable storage media of data transmission in a multicarrier system.

**BACKGROUND**

Multicarrier transmission has been widely applied in modem communication, irrespective of wireline systems such as discrete multi-tone (DMT) for asymmetric digital subscriber line (ADSL) and fiber access or wireless systems such as orthogonal frequency division multiplexing (OFDM) for long term evolution (LTE), new radio (NR) and WiFi. Multicarrier transmission involves data transmission over frequency-selective (spectrally shaped) channels. For such data transmission, a crucial design aspect of the multicarrier system is to perform power assignment among subcarriers (it is also referred to as subchannels hereinafter) to optimize the system transmission bandwidth. How to efficiently and optimally perform the power assignment has always been an issue of concern. US 6 400 773 B1 discloses a section division operating point determination method for multicarrier communication systems. US 7 310 301 B1 discloses multi-carrier modulation with source information allocated over variable quality communication channel. CHIH-YU HSU ET AL: "Coordinated multi-point transmission of MIMO-OFDM system with per-antenna power constraints", GLOBAL COMMUNICATIONS CONFERENCE (GLOBECOM), 2012 IEEE, IEEE, 3 December 2012 (2012-12-03), pages 4886-4892, XP032375450, DOI: 10.1109/GLOCOM.2012.6503893, ISBN: 978-1-4673-0920-2, discloses coordinated multi-point transmission of MIMO-OFDM system with per-antenna power constraints.

**SUMMARY**

In general, example embodiments of the present disclosure provide a solution for data transmission in a multicarrier system.

The invention is defined by the appended independent claims. Dependent claims constitute embodiments of the invention. In a first aspect, there is provided a method of data transmission according to claim 1.

In a second aspect, there is provided a transmitting device according to claim 10.

In a third aspect, there is provided a non-transitory computer readable medium according to claim 20.

It is to be understood that the summary section is not intended to identify key or essential features of embodiments of the present disclosure, nor is it intended to be used to limit the scope of the present disclosure. Other features of the present disclosure will become easily comprehensible through the following description.

**BRIEF DESCRIPTION OF THE DRAWINGS**

Some example embodiments will now be described with reference to the accompanying drawings, where:

Fig. 1 illustrates an example communication network in which example embodiments of the present disclosure may be implemented;

Fig. 2 illustrates a flowchart of a method of data transmission according to example embodiments of the present disclosure;

Fig. 3 illustrates a flowchart of an example method of determining a polygon region according to example embodiments of the present disclosure;

Fig. 4 illustrates a flowchart of an example method of determining a first optimal discrete power distribution according to example embodiments of the present disclosure;

Fig. 5 illustrates an example process of high-order convex searching according to example embodiments of the present disclosure;

Fig. 6 illustrates a flowchart of a method of determining a first optimal discrete power distribution according to further example embodiments of the present disclosure;

Fig. 7 illustrates a flowchart of a method of determining an equivalent range of the first Lagrange multiplier according to further example embodiments of the present disclosure;

Fig. 8 illustrates an example comparison of computation costs between the prior art and the present solution through a cumulative distribution function (CDF);

Fig. 9 illustrates an example comparison of performance results between the prior art and the present solution through a CDF;

Fig. 10 illustrates a simplified block diagram of an apparatus that is suitable for implementing example embodiments of the present disclosure; and

FIG. 11 illustrates a block diagram of an example computer readable medium in accordance with example embodiments of the present disclosure.

Throughout the drawings, the same or similar reference numerals represent the same or similar element.

## DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:

(a) hardware-only circuit implementations (such as implementations in only analog and/or digital circuitry) and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the future fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a Remote Radio Unit (RRU), a radio header (RH), a remote radio head (RRH), a relay, a low power node such as a femto, a pico, and so forth, depending on the applied terminology and technology.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

As described above, multicarrier transmission has been widely applied in modern communication. Multicarrier modulation is a special form of frequency division multiplexing. Thereby, the usable bandwidth is divided into many subchannels that are essentially independent and free of inter-symbol interference (ISI). Phase and/or amplitude modulation is applied for each subchannel, thus total number of symbols can be transmitted per unit time. By applying discrete Fourier transform (DFT) and its inverse (IDFT), modulation and demodulation can be done very efficiently, especially if the fast Fourier transform (FFT) is used. Remarkably, multicarrier communication remains its vitality for future ultra-broadband access, continuously meeting the ever-increasing rate requirement just by increasing the total number of subchannels. For example, the length of OFDM is extended from 1024 to 2048 points in LTE-A and NR standards.

For data transmission over frequency-selective (spectrally shaped) channels, a crucial design aspect of a multicarrier system is to optimize the system transmission bandwidth. Loosely speaking, this can be done by assigning a high data rate to subchannels with high signal to noise ratio (SNR) and a low data rate to carriers with low SNR. Often subchannels with very low SNR are not used at all. This adaption of data rate is usually carried out by varying the order of the signal constellation, e.g. from binary amplitude shift keying (2ASK) up to 1024 quadrate amplitude modulation (QAM) or even higher-rate signal sets. Moreover, transmit power of the subchannels can be adapted together with rate assignment. The objective of bit loading is to do such rate and power assignment in sense of maximizing the sum rate under given power budget.

Maximizing channel capacity over a spectrally-shaped Gaussian channel can be achieved by the well-known water-filling distribution. However, this approach is not well suited for practical data transmission because it assumes noninteger-bit constellations, which does not obey a given probability of error and is difficult to compute. Instead, the data throughput optimization problem of significant practical importance should consider integer-bit constellation. An additional constraint must be restricted to be an integer number of bits/symbol, corresponding to the modulation order applied for each subchannel. An integer number of bits are encoded to a constellation symbol indicating the particular phase and amplitude for each subchannel. Accordingly, the transmit power is determined by the SNR required to decode the integer number of bits successfully, which means that an effective power assignment are drawn from a discrete set of numbers.

Based on the above analysis, a bit loading problem over a set of subchannels , denoted by S , can be formulated as a constrained discrete optimization problem $r(P_{total})$ as shown below in equation (1).

$$\text{Problem } r(P_{total}):$$
$$r(P_{total}) = \max_{p_l} \sum_{l \in S} r_l(p_l)$$
$$s.t. \quad \sum_{l \in S} p_l \leq P_{total}$$
$$p_l \in A_l = \left\{ p_{l,0}, p_{l,1}, \cdots, p_{l,N_l} \right\}, \ l \in S$$

equation (1)

where $p_l$, $\sigma_l^2$, $h_l$ denote transmit power, noise power, and channel coefficient of subchannel $l \in S$, respectively. $r_l(P_l)$ represents the rate of subchannel $l \in S$ caused by $p_l$ modelling the transmission effect, where $r_l(P_l)$ is an increasing and concave function with respect to $p_l$. In some example embodiments, $r_l(P_l) = \log_2 \left( 1 + p_l |h_l|^2 / \sigma_l^2 \right)$. $P_{total}$ represents a total power budget (it is also referred to as a total power constraint hereinafter). $A_l = \{p_{l,0}, p_{l,1}, \cdots, P_{l,N_l}\}$ is a candidate set of discrete effective power assignments for subchannel $l \in S$, which are determined by the allowable modulation orders through the inverse function of $r_l(P_l)$. Specifically, in some example embodiments,

$$p_{l,k} = r_l^{-1}(x_k) = \frac{\left(2^{x_k} - 1\right)\sigma_l^2}{|h_l|^2}, \quad k = 0,1,\cdots,N_l$$

equation (2)

where $x_k$ stands for a nonnegative integer (bits) determined by certain modulation, and $N_l$ is a positive integer representing the maximum bits that can be carried out for a subchannel $l \in S$. For example, $x_k = 1$ for 2ASK, $x_k = 10$ for 1024QAM. The added constraint of total power renders the problem hard to solve. This occurs a large number of possible power combinations on the order of $\prod_{l \in S} N_l$. The bit loading algorithm attempt to seek an optimal power assignment out of all possible power combinations in sense of maximizing the sum rate. It becomes more challenging as the numbers of subchannels and allowable modulation order increase in the future application, which call for more computational efficient method.

Note that the Lagrange multiplier method is also valuable for the constrained discrete optimization problems. Basically, we add the constraint of total power weighted by a Lagrange multiplier to the objective function. Thus, a relaxed problem $R(\lambda)$ corresponding to a specific Lagrange multiplier $\lambda$ can be written as below in equation (3).

$$\text{Relaxed Problem } R(\lambda):$$
$$R(\lambda) = \max_{p_l} \sum_{l \in S} r_l(P_l) - \lambda \sum_{l \in S} p_l$$
$$s.t. \quad p_l \in A_l = \left\{ p_{l,0}, p_{l,1}, \cdots, p_{l,N_l} \right\}, \ l \in S$$

equation (3)

By solving the relaxed problem for given $\lambda$, we readily obtain an optimal discrete power assignment $p_l^*(\lambda)$ for $l \in S$. Based on which, an operating point of rate-power budget pair, denoted by $(r(P_\lambda), P_\lambda)$, determined by the Lagrange multiplier $\lambda$ can be written as below in equation (4).

$$\begin{cases} P_\lambda = \sum_{l \in S} p_l^*(\lambda) \\ r(P_\lambda) = \sum_{l \in S} r_l(p_l^*(\lambda)) \end{cases}$$

equation (4)

In some example embodiments with $r_l(P_l) = \log_2\left(1 + p_l \left|h_l\right|^2 / \sigma_l^2\right)$ , we have

$$r(P_\lambda) = \sum_{l \in S} \log_2\left(1 + p_l^*(\lambda) \left|h_l\right|^2 / \sigma_l^2\right) .$$

The theoretical result has been shown that $p_l^*(\lambda)$ is also the optimal solution to the constrained discrete problem $r(P_\lambda)$ defined above. In geometric view, $\lambda$ is a slope (subgradient) of the rate-power budget performance curve that is the convex hull of all operating points $(r(P),P)$. There exists an optimal Lagrange multiplier corresponds to the optimal operating point $(r(P_{total}), P_{total})$ associated with the optimal solution of $r(P_{total})$. The optimal Lagrange multiplier is very the slope of the performance curve at $P = P_{total}$. For the discrete optimization of bit loading, the desired Lagrange multiplier cannot be readily obtained by subgradient method.

Many algorithms for allocating power among subchannels exist. However, these methods are either computationally efficient but suboptimal or optimal but slow to obtain the power allocation. To date, to best of inventor's knowledge, the most efficient bit loading method is the proposed section division operating point determination method. In the section division operating point determination method, a linear bisection method is used to search the optimal Lagrange multiplier. However, there are drawbacks suffered in this linear bisection method.

Specifically, it involves a slow linear searching process by predicting the optimal Lagrange multiplier as the slope of line connecting two initial operating points. The linear search can be interpreted as approximating the convex hull of all operating points $(r(P),P)$ with a straight line between two points. Although such handling give rise to a slope between the slopes implied by both initial operating points, it is not the best possible approximation since the knowledge of derivatives is not used.

Further, it has the risk to converge to a suboptimal solution, not always guaranteeing the optimality. This is because that its iteration steps could not exclude the effect of the equivalent range for a Lagrange multiplier $\lambda_{new}$ used for the optimal bit loading. Theoretical results show that there may occur an equivalent range $(\lambda_{new,min}, \lambda_{new,max}]$ ($\lambda_{new,min} < \lambda_{new} \leq \lambda_{new,max}$) such that $(r(P_{\lambda'}),P_{\lambda'}) = (r(P_{\lambda''}), P_{\lambda''})$ holds for any $\lambda'$, $\lambda'' \in (\lambda_{new,min}, \lambda_{new,max}]$. In other words, $\lambda_{new}$ may be assigned with a value belong to the equivalent range either of two initial Lagrange multipliers, causing the termination condition in effect. The iteration is terminated before arriving at the optimal solution, resulting in a suboptimal solution with performance loss. Accordingly, the method is not completely suited for practical implementation.

Embodiments of the present disclosure provide an improved solution for performing power assignment for a set of subchannels, so as to at least in part solve the above and other potential problems. According to embodiments of the present disclosure, a high-order convex searching method that promises an optimal solution with higher computational efficiency is provided. In the proposed solution, the searching process is accelerated by establishing a sequence of diminishing convex polygon regions that can rapidly converge to the optimal operating point $(r(P_{total}), P_{total})$. Instead of linear searching, a high-order fitting curve is introduced to approximate the convex hull of the operating points and to generate a better Lagrange multiplier. The optimal solution is always ensured by determining the equivalent range for given Lagrange multipliers and taking into account its effects.

Some example embodiments of the present disclosure will be described below with reference to the figures. However, those skilled in the art would readily appreciate that the detailed description given herein with respect to these figures is for explanatory purpose as the present disclosure extends beyond theses limited embodiments.

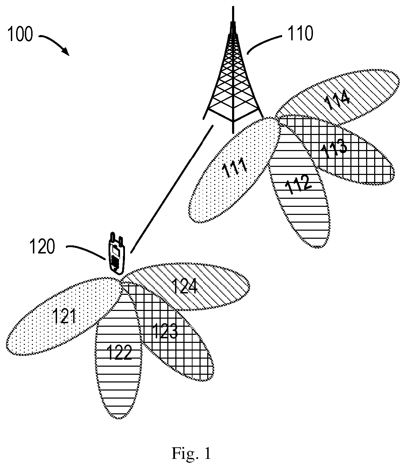

Fig. 1 illustrates an example communication network 100 in which embodiments of the present disclosure can be implemented. As shown in Fig. 1, the network 100 includes a transmitting device 110 and a receiving device 120 communicated with the transmitting device 110. In Fig. 1, the transmitting device 110 is shown as a network device and the receiving device 120 is shown as a terminal device. It should be understood that this is merely an example, and the transmitting device 110 may be a terminal device and the receiving device 120 may be a network device. That is, embodiments of the present disclosure can be not only applied to downlink transmission but also can be applied to uplink transmission. It is to be understood that the number of network devices and terminal devices as shown in Fig. 1 is only for the purpose of illustration without suggesting any limitations. The network 100 may include any suitable number of devices adapted for implementing embodiments of the present disclosure.

As shown in Fig. 1, the transmitting device 110 and the receiving device 120 may communicate with each other. The transmitting device 110 may have multiple antennas for communication with the receiving device 120. For example, the transmitting device 110 may include four antennas 111, 112, 113, and 114. The receiving device 120 may also have multiple antennas for communication with the transmitting device 110. For example, the receiving device 120 may include four antennas 121, 122, 123, and 124. It is to be understood that the number of antennas as shown in Fig. 1 is only for the purpose of illustration without suggesting any limitations. Each of the transmitting device 110 and the receiving device 120 may provide any suitable number of antennas adapted for implementing embodiments of the present disclosure.

The communications in the network 100 may conform to any suitable standards including, but not limited to, LTE, LTE-evolution, LTE-advanced (LTE-A), wideband code division multiple access (WCDMA), code division multiple access (CDMA) and global system for mobile communications (GSM) and the like. Furthermore, the communications may be performed according to any generation communication protocols either currently known or to be developed in the future. Examples of the communication protocols include, but not limited to, the first generation (1G), the second generation (2G), 2.5G, 2.75G, the third generation (3G), the fourth generation (4G), 4.5G, the fifth generation (5G) communication protocols.

In some embodiments, a set of subchannels may be established between the transmitting device 110 and the receiving device 120 via the multiple antennas 111, 112, 113 and 114 and the multiple antennas 121, 122, 123, and 124 for data transmission, and a power assignment may be performed among the set of subchannels so that a sum rate for the set of subchannels that is higher than a threshold value is caused under a given power budget. In some embodiments, the power assignment may be performed so as to maximize the sum rate under the given power budget.

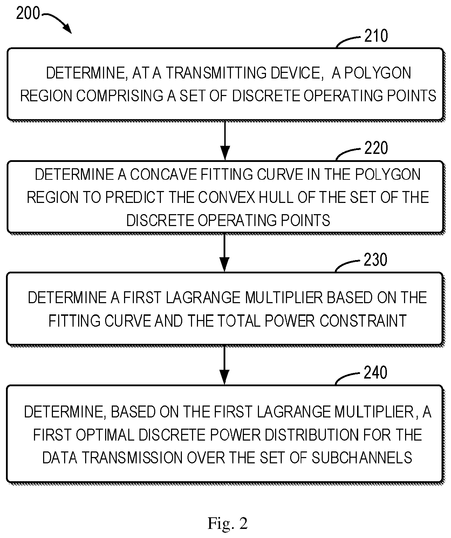

Fig. 2 illustrates a flowchart of a method 200 of data transmission according to example embodiments of the present disclosure. The method 200 can be implemented at the transmitting device 110 shown in Fig. 1. For the purpose of discussion, the method 200 will be described with reference to Fig. 1. It is to be understood that method 200 may further include additional blocks not shown and/or omit some shown blocks, and the scope of the present disclosure is not limited in this regard.

As shown in FIG. 2, at block 210, the transmitting device 110 may determine, based on a total power constraint of a set of subchannels between the transmitting device 110 and the receiving device 120, channel gain and noise power of each of the set of subchannels, and a candidate set of discrete effective power assignments used for each of the set of subchannels, a polygon region comprising a set of discrete operating points. Each of the set of discrete operating points represents a rate-power budget pair determined by an optimal discrete power distribution over the set of subchannels with an associated Lagrange multiplier.

Parameters regarding the channel gain and noise power of each of the set of subchannels may be designed in various forms. In some embodiments, a ratio of noise power and the channel gain may be adopted. In some alternative embodiments, any quantity relating to the ratio may be adopted. For example, noise-to-channel ratio may be adopted in form of $\sigma_l^2 \big/ |h_l|^2$, where $\sigma_l$ denotes noise power of subcarrier $l$, and, $h_l$ denote channel gain of subchannel $l$, $l \in S$. It should be note that the present application does not limit this point, and any other suitable forms regarding the channel gain and noise power of each of the set of subchannels can be adopted.

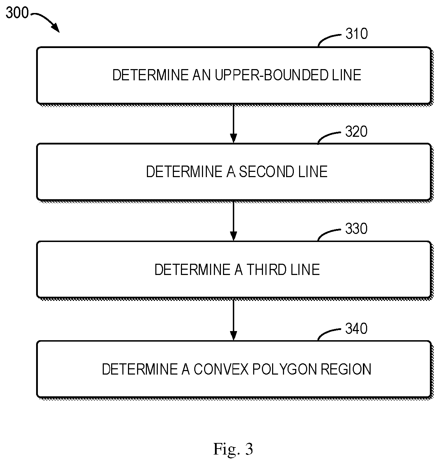

Merely for illustration, an example determination of the polygon region will be described with reference to Fig. 3. Fig. 3 illustrates a flowchart of an example method 300 of determining a polygon region according to example embodiments of the present disclosure. The method 300 can be implemented at the transmitting device 110 shown in Fig. 1. For the purpose of discussion, the method 300 will be described with reference to Fig. 1. It is to be understood that method 300 may further include additional blocks not shown and/or omit some shown blocks, and the scope of the present disclosure is not limited in this regard.

As shown in Fig. 3, at block 310, the transmitting device 110 may determine an upper-bounded line through optimal continuous power allocation under the total power constraint such that all possible operating points locate below the upper-bounded line on rate-power budget plane.

In some example embodiments, a total power constraint $P_{total}$, noise-to-channel ratio in form of $\sigma_l^2 \big/ |h_l|^2$, feasible set of power assignments $A_l = \{p_{l,0}, p_{l,1}, \cdots, p_{l,N_l}\}$ for all subchannel $l \in S$ may be predetermined. Here $A_l$ is determined according to inter-bit modulation as mentioned above such that $r_l(p_l)$ ( $r_l(p_l) = \log_2\left(1 + p_l |h_l|^2 \big/ \sigma_l^2\right)$ in some example embodiments) is a nonnegative integer for $p_l \in A_l$. In some example embodiments, for computational convenience, $A_l$ is sorted in the nondecreasing order. Without of loss generality, $0 = p_{l,0} \le p_{l,1} \le \cdots \le p_{l,N_l}$ is assumed.

Then an upper-bounded operating point $(r_{upper}, P_{total})$ and its corresponding slope $\lambda_{upper}$ may be determined through solving a relaxed conterpart without discrete restriction. They are used to contruct an upper-bounded line $r = \lambda_{upper}(P - P_{total}) + r_{upper}$ in the rate-power budget plane that is always above all operating points.

In some alternative embodiments, a water-filling algorithm may be used to determine $(r_{upper}, P_{total})$ and corresponding Lagrange multiplier $\lambda_{upper}$. It can be proved that $\lambda_{upper}$ is the slope of the continuous (concave) rate-power budget curve consisting of continuous power allocation. This curve always upper bound the convex hull of all operating points $(r(P), P)$, and so does the line $r = \lambda_{upper}(P - P_{total}) + r_{upper}$. In some example embodiments with $r_l(p_l) = \log_2\left(1 + p_l |h_l|^2 \big/ \sigma_l^2\right)$, we can determine the nonnegative $\lambda_{upper}$ by solving

$$\sum_{l \in S} \max\left(0, \frac{1}{\lambda_{upper} \ln 2} - \frac{\sigma_l^2}{|h_l|^2}\right) = P_{total}.$$

The rate value of the upper-bounded operation point reads $r_{upper} = \sum_{l \in S} \log_2 \left(1 + \overline{p}_l^* |h_l|^2 / \sigma_l^2 \right)$ with

$$\overline{p}_l^* = \max \left( 0, \frac{1}{\lambda_{upper} \ln 2} - \frac{\sigma_l^2}{|h_l|^2} \right) \text{ for } l \in S.$$

At block 320, the transmitting device 110 may determine a second line based on a second Lagrange multiplier and a second operating point representing a second rate-power budget pair, the second operating point being determined based on the second Lagrange multiplier, and the second Lagrange multiplier being determined such that the power value of the second rate-power budget pair is less than the total power constraint. In some embodiments, the second line may be determined by a line through the second operating point whose slope equals the second Lagrange multiplier.

At block 330, the transmitting device 110 may determine a third line based on a third Lagrange multiplier and a third operating point representing a third rate-power budget pair, the third operating point being determined based on the third Lagrange multiplier, and the third Lagrange multiplier being determined such that the power value of the third rate-power budget pair is more than the total power constraint. In some embodiments, the second line may be determined by a line through the second operating point whose slope equals the second Lagrange multiplier.

For example, the second and third Lagrange multipliers may be denoted as $\lambda_0$ and $\lambda_1$. They are assigned with initial values, and the corresponding second and third operation points $(r(P_0), P_0)$ and $(r(P_1), P_1)$ are determined, respectively. In some embodiments, the initial values should ensure $P_0 < P_{total} \le P_1$. Accordingly, an optimal Lagrange multiplier lies between $\lambda_0$ and $\lambda_1$.

In some alternative embodiments, the second Lagrange multiplier may be determined by sorting, in the nondecreasing order, discrete effective power assignments in the candidate set of discrete effective power assignments used for each of the set of subchannels; determining, for each of the set of subchannels, a value of rate change relative to the two smallest discrete effective power assignments for each of the set of subchannels; and determining the second Lagrange multiplier with the maximum value of rate change among the set of subchannels.

In some alternative embodiments, the third Lagrange multiplier may be determined by sorting, in the nondecreasing order, discrete effective power assignments in the candidate set of discrete effective power assignments used for each of the set of subchannels; determining, for each of the set of subchannels, a value of rate change relative to the two largest discrete effective power assignments for each of the set of subchannels; and determining the third Lagrange multiplier with the minimum value of rate change among all the set of subchannels.

For example, the computation as shown below in equation (5) may be made to determine $\lambda_0$ and $\lambda_1$.

$$\begin{cases} \lambda_0 = \max_{l \in S} \dfrac{r_l(p_{l,1}) - r_l(p_{l,1})}{p_{l,1} - p_{l,1}} \\ \lambda_1 = \max_{l \in S} \dfrac{r_l(p_{l,N_l}) - r_l(p_{l,N_l-1})}{p_{l,N_l} - p_{l,N_l-1}} \end{cases} \qquad \text{equation (5)}$$

where $r_l(p_l) = \log_2 \left(1 + p_l |h_l|^2 / \sigma_l^2 \right)$ in some example embodiments.

In this way, a fast implementation approach that always make $P_0 < P_{total} \le P_1$ valid.

At block 340, the transmitting device 110 may determine a convex polygon region enclosed by the upper-bounded line, the second line, the third line, and a line connecting the second operating point and the third operating point.

For example, from the second and third operating points $(r(P_0), P_0)$ and $(r(P_1), P_1)$, upper-bounded point $(r_{upper}, P_{total})$, and their corresponding slopes $\lambda_0$, $\lambda_1$ and $\lambda_{upper}$, a convex polygon region $\Omega$ is constructed by the four lines as shown in equation (6).

$$\Omega = \left\{ (r, P) \middle| \begin{array}{l} r \le \lambda_{upper} \left( P - P_{total} \right) + r_{upper}, \\ r \le \lambda_0 \left( P - P_0 \right) + r(P_0), \\ r \le \lambda_1 \left( P - P_1 \right) + r(P_1), \\ r \ge \dfrac{r(P_1) - r(P_0)}{P_1 - P_0} \left( P - P_0 \right) + r(P_0) \end{array} \right\} \qquad \text{equation (6)}$$

According to embodiments of the present disclosure, $\Omega$ always contains the optimal operating point ($r(P_{total})$, $P_{total}$) and may continue to reduce during iteration procedure. It should be note that the polygon region may be determined in any other suitable ways so as to cover all possible discrete operating points.

Returning to Fig. 2, at block 220, the transmitting device 110 may determine a concave fitting curve in the polygon region to predict the convex hull of the set of the discrete operating points. In some embodiments, the fitting curve may be determined in any suitable way so as to be concave and within the polygon region.

In some embodiments, a high-order continuous and concave fitting curve $f(P)$ contained in $\Omega$ may be designed such that $f(P_0)=r(P_0)$, $f(P_1)=r(P_1)$, $f'(P_0)=\lambda_0$, and $f'(P_1)=\lambda_1$.

In some embodiments, the transmitting device 110 may determine the shape of the polygon region based on the upper-bounded line and an intersection point of the second line and the third line and determine the concave fitting curve based on the determined shape of the polygon region such that the second line and the third line are the tangents of the fitting curve at the second and third operating points, respectively.

As to the determination of the shape, in some example embodiments, an intersection point ($x_0$, $y_0$) of both lines of $y = \lambda_0(x-P_0)+r(P_0)$ and $y = \lambda_1(x-P_1)+r(P_1)$ that are figure out by two initial operating points and their Lagrange multipliers is determined. Obviously, ($x_0$, $y_0$) can be determined in closed-form expressions as shown in equation (7).

$$\begin{cases} x_0 = \dfrac{\left(r\left(P_1\right)-\lambda_1 P_1\right)-\left(r\left(P_0\right)-\lambda_0 P_0\right)}{\lambda_0 - \lambda_1} \\[3mm] y_0 = \dfrac{\lambda_0\left(r\left(P_1\right)-\lambda_1 P_1\right)-\lambda_1\left(r\left(P_0\right)-\lambda_0 P_0\right)}{\lambda_0 - \lambda_1} \end{cases} \qquad \text{equation (7)}$$

Subsequently, the shape of $\Omega$ may be determined by checking the condition of $y_0 \leq \lambda_{upper}(x_0 - P_{total})+ r_{upper}$. If the condition is satisfied, $\Omega$ is a trigon determined by three points ($P_0$, $r(P_0)$), ($x_0$, $y_0$), and ($P_1$, $r(P_1)$) in a clock-wise order. Otherwise, $\Omega$ is a quadrangle determined by four points ($P_0$, $r(P_0)$), ($x_1$, $y_1$), ($x_2$, $y_2$) and ($P_1$, $r(P_1)$) in a clock-wise order. ($x_1$, $y_1$) and ($x_2$, $y_2$) are the intersection points where line $y = \lambda_{upper}(x-P_{total})+r_{upper}$ crosses both lines $y = \lambda_0(x- P_0) + r(P_0)$ and $y = \lambda_1(x-P_1)+r(P_1)$. They may be calculated out using the same method as ($x_0$, $y_0$), as shown in equation (8).

$$\begin{cases} x_1 = \dfrac{\left(r_{upper} - \lambda_{upper} P_{total}\right)-\left(r\left(P_0\right)-\lambda_0 P_0\right)}{\lambda_0 - \lambda_{upper}} \\[3mm] y_1 = \dfrac{\lambda_0\left(r_{upper} - \lambda_{upper} P_{total}\right)-\lambda_{upper}\left(r\left(P_0\right)-\lambda_0 P_0\right)}{\lambda_0 - \lambda_{upper}} \end{cases}$$

$$\begin{cases} x_2 = \dfrac{\left(r_{upper} - \lambda_{upper} P_{total}\right)-\left(r\left(P_1\right)-\lambda_1 P_1\right)}{\lambda_1 - \lambda_{upper}} \\[3mm] y_2 = \dfrac{\lambda_1\left(r_{upper} - \lambda_{upper} P_{total}\right)-\lambda_{upper}\left(r\left(P_1\right)-\lambda_1 P_1\right)}{\lambda_1 - \lambda_{upper}} \end{cases} \qquad \text{equation (8)}$$

As to the determination of the concave fitting curve, in some example embodiments, the transmitting device 110 may determine the concave fitting curve by a quadratic Bezier curve controlled by a trigon determined by the second line, the third line and the line connecting the second operating point and the third operating point.

For example, for the trigon case of $\Omega$, a satisfactory fitting curve can be a quadratic Bezier curve controlled by three points of $\mathbf{a}_0 =(P_0, r(P_0))$, $\mathbf{a}_1 =(x_0, y_0)$, and $\mathbf{a}_2 =(P_1, r(P_1))$. The resulted fitting curve can be written as in the following parametric form (as shown in equation 9) based on a scale variable $0 \leq t \leq 1$.

$$\mathbf{b}(t) = \left(1-t\right)^2 \mathbf{a}_0 + 2\left(1-t\right)t\mathbf{a}_1 + t^2\mathbf{a}_2 \qquad \text{equation (9)}$$

Accordingly, the derivative of the quadratic Bezier curve $\mathbf{b}(t)$ can be calculated out by the following equation (10).

$$d(t) = \frac{-r(P_0)(1-t) + y_0(1-2t) + r(P_1)t}{-P_0(1-t) + x_0(1-2t) + P_1 t} \qquad \text{equation (10)}$$

In some alternative embodiments, the transmitting device 110 may determine the concave fitting curve by a cubic Bezier curve controlled by a quadrangle determined by the upper-bounded line, the second line, the third line and the line connecting the second operating point and the third operating point.

For example, for the quadrangle case of $\Omega$, a satisfactory fitting curve can be a cubic Bezier curve controlled by four points of $\mathbf{a}_0 = (P_0, r(P_0))$, $\mathbf{a}_1 = (x_1, y_1)$, $\mathbf{a}_2 = (x_2, y_2)$ and $\mathbf{a}_3 = (P_1, r(P_1))$. The resulted fitting curve can be written as in the following parametric form (equation 11) based on a scale variable $0 \leq t \leq 1$.

$$\mathbf{b}(t) = (1-t)^3 \mathbf{a}_0 + 3(1-t)^2 t \mathbf{a}_1 + 3(1-t)t^2 \mathbf{a}_2 + t^3 \mathbf{a}_3 \qquad \text{equation (11)}$$

Accordingly, the derivative of the cubic Bezier curve $\mathbf{b}(t)$ can be calculated out by the following equation (12).

$$d(t) = \frac{-r(P_0)(1-t)^2 + y_1(1-4t+3t^2) + y_2(2t-3t^2) + r(P_1)t^2}{-P_0(1-t)^2 + x_1(1-4t+3t^2) + x_2(2t-3t^2) + P_1 t^2} \qquad \text{equation (12)}$$

So far, the satisfactory fitting curve $f(P)$ is described in a parametric form $\mathbf{b}(t)=(b_1(t), b_2(t))$. It can be shown that $P_0 = b_1(0)$, $f(P_0)=r(P_0)=b_2(0)$, $P_1 = b_1(1)$, $f(P_1)=r(P_1)=b_2(0)$, $f'(P_0)=\lambda_0=d(0)$, and $f'(P_1)=\lambda_1=d(1)$.

At block 230, the transmitting device 110 may determine a first Lagrange multiplier $\lambda_{new}$ based on the concave fitting curve and the total power constraint. In some example embodiments, the transmitting device 110 may determine an intersection point between the concave fitting curve and a line determined by the total power constraint, and determine the first Lagrange multiplier with a derivative of the concave fitting curve at the intersection point. For example, the first Lagrange multiplier is determined by the derivative of the concave fitting curve at the proximal point of $(f(P_{total}), P_{total})$. For example, $\lambda_{new} = f'(P_{total})$.

For example, the parametric form of derivative $d(t)$ may be used to determine $\lambda_{new} = f'(P_{total})$. First, a parameter $\bar{t}$ corresponding to point $(f(P), P_{total})$ need to be derived.

In some example embodiments, for the trigon case of $\Omega$, $\lambda_{new} = f'(P_{total})$ may be directly determined by the following equation (13).

$$\lambda_{new} = \frac{-r(P_0)(1-\bar{t}) + y_0(1-2\bar{t}) + r(P_1)\bar{t}}{-P_0(1-\bar{t}) + x_0(1-2\bar{t}) + P_1 \bar{t}} \qquad \text{equation (13)}$$

where $0 < \bar{t} < 1$ is the solution of the quadratic equation with single unknown $t$ $P_{total} = P_0(1-t)^2 + 2x_0 t(1-t) + P_1 t^2$. Note that $\bar{t}$ can be readily obtained through a closed-form equation (14).

$$\bar{t} = \begin{cases} \dfrac{P_{total} - P_0}{2(x_0 - P_0)} & \Gamma = 0 \\[2em] -\dfrac{x_0 - P_0}{\Gamma} + \sqrt{\dfrac{(x_0-P_0)^2}{\Gamma^2} + \dfrac{\bar{P} - P_0}{\Gamma}} & \Gamma \neq 0 \end{cases} \qquad \text{equation (14)}$$

where $\Gamma = (P_1 - x_0) - (x_0 - P_0)$.

In some alternative embodiments, for the quadrangle case of $\Omega$, $\lambda_{new} = f'(P_{total})$ may be directly determined by the following equation (15).

$$\lambda_{new} = \frac{-r(P_0)(1-\bar{t})^2 + y_1(1-4\bar{t}+3\bar{t}^2) + y_2(2\bar{t}-3\bar{t}^2) + r(P_1)\bar{t}^2}{-P_0(1-\bar{t})^2 + x_1(1-4\bar{t}+3\bar{t}^2) + x_2(2\bar{t}-3\bar{t}^2) + P_1 \bar{t}^2} \qquad \text{equation (15)}$$

where $0 < \bar{t} < 1$ is the solution of the following cubic equation with single unknown $t$

$$\left(P_1 - P_0 + 3x_1 - 3x_2\right)t^3 + 3\left(P_0 - 2x_1 + x_2\right)t^2 + 3\left(-P_0 + x_1\right)t + P_0 - P_{total} = 0 \,.$$

Note that $0 < \bar{t} < 1$ can be readily obtained through the closed-form computation as stated in reference (W. H.; Teukolsky, S. A.; Vetterling, W. T.; Flannery, B. P. (2007), "Section 5.6 Quadratic and Cubic Equations", Numerical Recipes: The Art of Scientific Computing (3rd ed.), New York: Cambridge University Press, ISBN 978-0-521-88068-8).

At block 240, the transmitting device 110 may determine, based on the first Lagrange multiplier $\lambda_{new}$, a first optimal discrete power distribution for the data transmission over the set of subchannels. In some embodiments, the first optimal discrete power distribution may be computed by the following equation (16).

$$p_l^*(\lambda_{new}) = \arg \max_{p_l \in A_l,\ l \in S} \sum_{l \in S} \log_2 \left(1 + \frac{p_l}{\sigma_l^2 / |h_l|^2}\right) - \lambda_{new} \sum_{l \in S} p_l \qquad \text{equation (16)}$$

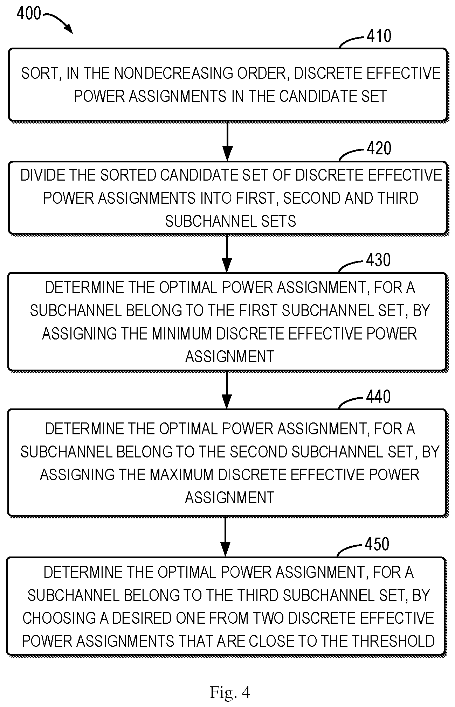

An alternative example determination of the first optimal discrete power distribution will be described with reference to Fig. 4. Fig. 4 illustrates a flowchart of an example method 400 of determining a first optimal discrete power distribution according to example embodiments of the present disclosure. The method 400 can be implemented at the transmitting device 110 shown in Fig. 1. For the purpose of discussion, the method 400 will be described with reference to Fig. 1. It is to be understood that method 400 may further include additional blocks not shown and/or omit some shown blocks, and the scope of the present disclosure is not limited in this regard.

As shown in Fig. 4, at block 410, the transmitting device 110 may sort, in the nondecreasing order, discrete effective power assignments in the candidate set of discrete effective power assignments, denoted by $A_l = \{p_{l,0}, p_{l,1}, \cdots, p_{l,N_l}\}$, used for each of the set of subchannels.

At block 420, the transmitting device 110 may divide, based on a threshold determined by the first Lagrange multiplier, the sorted candidate set of discrete effective power assignments into a first subchannel set $S_1$, a second subchannel set $S_2$, and a third subchannel set $S_3$. In some embodiments with $r_l(p_l) = \log_2\left(1 + p_l |h_l|^2 / \sigma_l^2\right)$, the threshold may be determined by $\dfrac{1}{\lambda_{new} \ln 2} - \dfrac{\sigma_l^2}{|h_l|^2}$. It should be note that threshold also can be determined in any other suitable way.

For example, the whole set of subchannels $S$ may be divided into three exclusive subsets $S_1$, $S_2$, and $S_3$, that are specified as the following equations (17)-(19), respectively.

$$S_1 = \left\{ l \in S \,\middle|\, p_{l,0} > \frac{1}{\lambda_{new} \ln 2} - \frac{\sigma_l^2}{|h_l|^2} \right\}, \qquad \text{equation (17)}$$

$$S_2 = \left\{ l \in S \,\middle|\, p_{l,N_l} \le \frac{1}{\lambda_{new} \ln 2} - \frac{\sigma_l^2}{|h_l|^2} \right\}, \qquad \text{equation (18)}$$

and

$$S_3 = \left\{ l \in S \,\middle|\, p_{l,0} \le \frac{1}{\lambda_{new} \ln 2} - \frac{\sigma_l^2}{|h_l|^2} < p_{l,N_l} \right\}. \qquad \text{equation (19)}$$

According to embodiments of the present disclosure, different procedures are designed to determine the power assignment $p_l^*(\lambda_{new})$ from the individual subchannel respective.

At block 430, the transmitting device 110 may determine the optimal power assignment, for a subchannel belong to the first subchannel set $S_1$, by assigning the minimum discrete effective power assignment in the candidate set. For example, $p_l^*(\lambda_{new}) = p_{l,0}$, for $l \in S_1$.

At block 440, the transmitting device 110 may determine the optimal power assignment, for a subchannel belong to the second subchannel set $S_2$, by assigning the maximum discrete effective power assignment in the candidate set. For example, $p_l^*(\lambda_{new}) = p_{l,N_l}$, for $l \in S_2$.

At block 450, the transmitting device 110 may determine the optimal power assignment, for a subchannel belong to the third subchannel set $S_3$, by choosing a desired one from two discrete effective power assignments that are close to the threshold. For example, $p_l^*(\lambda_{new}) = \arg \max\limits_{k \in \{b_l, b_l+1\}} \log_2\left(1 + p_{l,k}|h_l|^2 / \sigma_l^2\right) - \lambda_{new} p_{l,k}$, for $l \in S_3$. For $l \in S_3$, index $b_l$ is determined such that $p_{l,b_l} \leq \dfrac{1}{\lambda_{new} \ln 2} - \dfrac{\sigma_l^2}{|h_l|^2} < p_{l,b_l+1}$.

With the method 400, the computation can be accelerated by exploiting the order of $A_l = \{p_{l,0}, p_{l,1}, \cdots, P_{l,N_l}\}$ and the concavity and separability of $r_l(p_l) = \log_2\left(1 + p_l|h_l|^2 / \sigma_l^2\right)$, avoiding searching over the whole set of $A_l$. It should be note that the first optimal discrete power distribution may also be determined in any other suitable way.

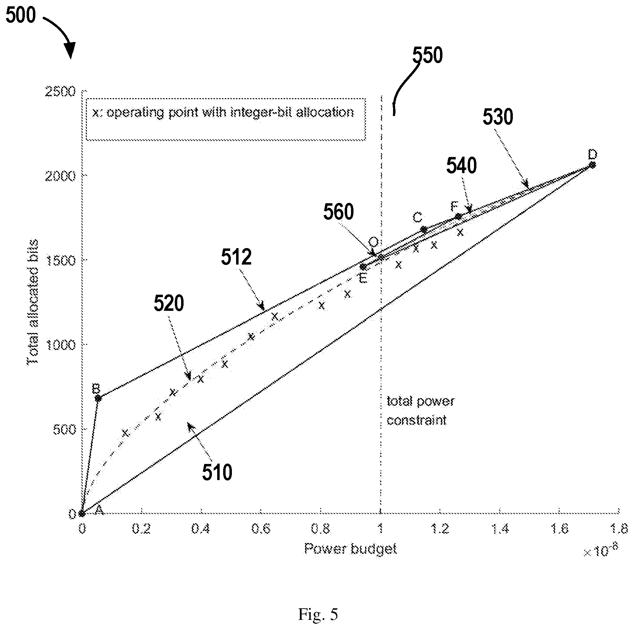

In some embodiments, through iteration of operations at blocks 210-240, a sequence of diminishing convex regions that can rapidly converge to the optimal operating point may be generated, and correspondingly, a high-order fitting curve may be designed to predict the optimal Lagrange multiplier corresponding to the optimal operating point, and thereby the optimal operation point through high-order convex searching is fast gotten. It will be further described with reference to Fig. 5. Fig. 5 illustrates an example process 500 of high-order convex searching according to example embodiments of the present disclosure. As shown in Fig. 5, on a rate-power budget plane, discrete operating points with integer-bit allocation are denoted by a sign " $\times$", and the optimal operating point is denoted by point O.

For example, the knowledge of both initial operating points A and D may be used to determine three lines AD, AB, and CD. Indeed, the slopes of AB and CD are very the Lagrange multipliers corresponding to operating points A and D, respectively. In combination with the introduced upper-bounded line BC 512, these four lines may form the quadrangle region ABCD 510 that always contains the optimal operating point O 560.

Within the quadrangle region ABCD 510, a third-order concave fitting curve 520 is designed to approximate the convex hull of the operating points. The fitting curve 520 must be concave and satisfy that lines AB and CD must be the tangents of the fitting curve 520. Such curve matching ensure that any derivative of the curve is between the slopes of lines AB and CD. The curve must cross the line of total power constraint 550 at a point, the derivative at which can serve as a predicted value of the optimal Lagrange multiplier. Corresponding to the predicted Lagrange multiplier, a new operating point E may be determined.

Subsequently, the knowledge of operating points E and D can be also leveraged to construct a reduced trigon region EFD 530 containing the optimal operating point O 560. Similarly, the slope of EF is very the Lagrange multiplier corresponding to operating points E. Since the intersection point F is below the upper-bounded line BC, there a trigon is formed instead of a quadrangle. Within the trigon region EFD 530, a second-order concave fitting curve 540 is designed to approximate the convex hull of the operating points, where the curve fitting follows the same requirement as the quadrangle case. The second-order curve 540 also crosses the line of total power constraint 550 at a point, the derivative at which can also serve as a predicted value of the optimal Lagrange multiplier. Accordingly, the prediction continues to be updated and refined. As a consequence, a more closer operating point to the optimality is attained.

In contrast, the prior art just uses a straight line for approximation, which predicts the optimal Lagrange multiplier merely via slopes of AD and ED, ignoring the knowledge of derivative related to the known operating points. Through the above iteration according to embodiments of the present disclosure, the convex approximation region is dramatically reduced from quadrangle ABCD to trigon EFD. Repeating the similar handling, the area of approximation region continues to reduce quickly until converging to the optimal operating points. In particular, the diminishing region provides a fast way to continue refining the approximation for the performance curve of the operating points, as well as the prediction for the optimal Lagrange multiplier. The higher-order curve fitting takes full advantage of the knowledge of derives and the diminishing convex approximation region, which accelerates the searching process for the optimal Lagrange multiplier.

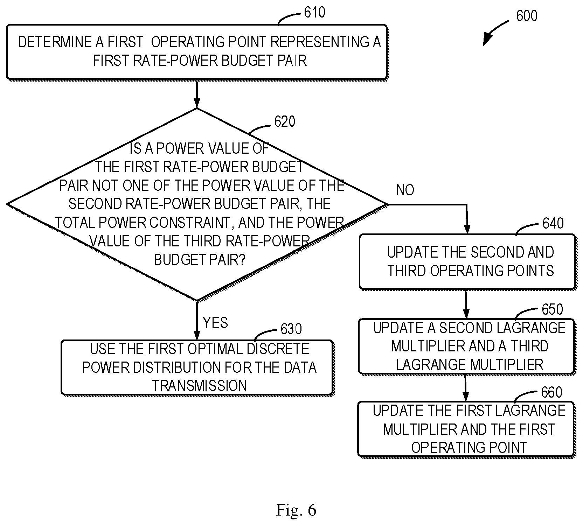

As to the above iteration process, it will be further described with reference to Fig. 6 in detail. FIG. 6 shows a flowchart of a method 600 of determining a first optimal discrete power distribution according to further example embodiments of the present disclosure. The method 600 can be implemented at the transmitting device 110 shown in Fig. 1. For the purpose of discussion, the method 600 will be described with reference to Fig. 1. It is to be understood that method 600 may further include additional blocks not shown and/or omit some shown blocks, and the scope of the present disclosure is not limited in this regard.

Upon determining the first optimal discrete power distribution $p_l^*(\lambda_{new})$ based on the first Lagrange multiplier $\lambda_{new}$, at block 610, the transmitting device 110 may determine, based on the first optimal discrete power distribution

$p_l^*(\lambda_{new})$ , a first operating point representing a first rate-power budget pair where the power budget tends toward the total power constraint. In some embodiments, the first operating point may be determined by summarizing the first optimal discrete power distribution and its caused rate distribution across the set of subchannels. For example, the first operating point ($r(P_{new}),P_{new}$) can be computed by the following equation (20).

$$P_{new} = \sum_{l \in S} p_l^*(\lambda_{new})$$
$$r(P_{new}) = \sum_{l \in S} r_l\left(p_l^*(\lambda_{new})\right)$$

equation (20)

where

$$p_l^*(\lambda_{new}) = \arg \max_{p_l \in A_l,\ l \in S} \sum_{l \in S} r_l(p_l) - \lambda_{new} \sum_{l \in S} p_l$$

with $r_l(p_l) = \log_2\left(1 + p_l |h_l|^2 / \sigma_l^2\right)$ in some example embodiments.

At block 620, the transmitting device 110 may determine whether a power value $P_{new}$ of the first rate-power budget pair is one of the power value $P_0$ of the second rate-power budget pair represented by the second operating point, the total power constraint $P_{total}$, and the power value $P_1$ of the third rate-power budget pair represented by the third operating point. In some embodiments, the second rate-power budget pair and the third rate-power budge pair are also obtained in the same way as the first rate-power budge pair based on the second Lagrange multiplier and the third Lagrange multiplier respectively. Then its details are omitted for concise.

If determining at block 620 that the power value $P_{new}$ of the first rate-power budget pair is one of the power value $P_0$ of the second rate-power budget pair, the total power constraint $P_{total}$, and the power value $P_1$ of the third rate-power budget pair, at block 630, the transmitting device 110 may use the first optimal discrete power distribution for the data transmission over the set of subchannels between the transmitting device 110 and the receiving device 120.

If determining at block 620 that the power value $P_{new}$ of the first rate-power budget pair is not one of the power value $P_0$ of the second rate-power budget pair, the total power constraint $P_{total}$, and the power value $P_1$ of the third rate-power budget pair, at block 640, the transmitting device 110 may update the second and third operating points with the first operating point.

At block 650, the transmitting device 110 may update the second Lagrange multiplier $\lambda_0$ and the third Lagrange multiplier $\lambda_1$ with an equivalent range ($\lambda_{new,min}$, $\lambda_{new,max}$] of the first Lagrange multiplier. In some embodiments, the second Lagrange multiplier may be determined such that the power value of the second rate-power budget pair is less than the total power constraint and the third Lagrange multiplier may be determined such that the power value of the third rate-power budget pair is more than the total power constraint. According to some embodiments of the present disclosure, the equivalent range of the first Lagrange multiplier may cause the same first optimal discrete power distribution for data transmission and the same first operating point.

In some embodiments, if the power value $P_{new}$ of the first rate-power budget pair is smaller than the total power constraint $P_{total}$, replacing the second Lagrange multiplier $\lambda_0$ with lower bound of the equivalent range of the first Lagrange multiplier $\lambda_{new}$ plus an arbitrary small positive $\varepsilon$. In some embodiments, if the power value of the first rate-power budget pair $P_{new}$ is larger than the total power constraint $P_{total}$, replacing the third Lagrange multiplier with an upper bound of the equivalent range of the first Lagrange multiplier. For example, if $P_{new}>P_{total}$, then $\lambda_1 = \lambda_{new,max}$ and ($r(P_1),P_1$)=($r(P_{new}),P_{new}$) . if $P_{new} < P_{total}$ , then $\lambda_0=\lambda_{new,min} +\varepsilon$ and ($r(P_0),P_0$)=($r(P_{new}),P_{new}$), where $\varepsilon$ is a very small positive number such as $\varepsilon=10^{-13}$.

In this way, the searching range of Lagrange multiplier is significantly reduced by excluding the equivalent range, which also avoids the unexpected termination ahead of attaining the optimality.

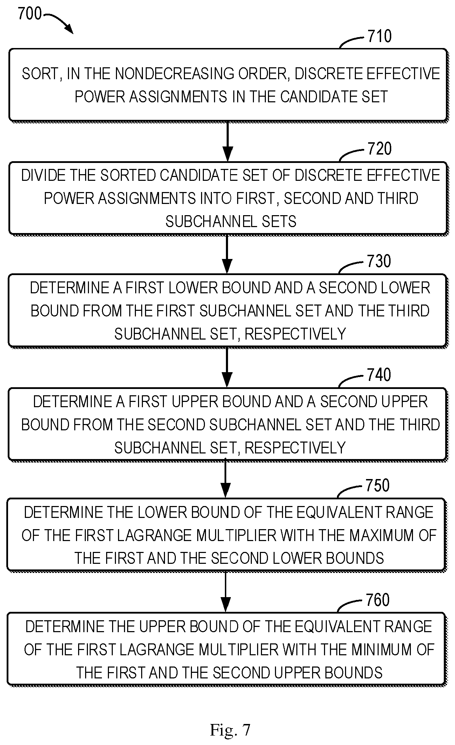

As to the determination of the equivalent range, its example implantation will be described with reference to Fig. 7 in detail. Fig. 7 illustrates a flowchart of an example method 700 of determining an equivalent range of the first Lagrange multiplier according to example embodiments of the present disclosure. The method 700 can be implemented at the transmitting device 110 shown in Fig. 1. For the purpose of discussion, the method 700 will be described with reference to Fig. 1. It is to be understood that method 700 may further include additional blocks not shown and/or omit some shown blocks, and the scope of the present disclosure is not limited in this regard.

As shown in Fig. 7, at block 710, the transmitting device 110 may sort, in the nondecreasing order, discrete effective power assignments in the candidate set in the candidate set of discrete effective power assignments, denoted by $A_l = \{p_{l,0}, p_{l,1},\cdots, p_{l,Nl}\}$, used for each of the set of subchannels. The operation is similar to that in block 410.

At block 720, the transmitting device 110 may divide, based on a threshold determined by the first Lagrange multiplier, the sorted candidate set of discrete effective power assignments into a first subchannel set $S_1$, a second subchannel set $S_2$, and a third subchannel set $S_3$. In some embodiments with $r_l(p_l) = \log_2\left(1 + p_l |h_l|^2 / \sigma_l^2\right)$, the threshold may be determined by $\dfrac{1}{\lambda_{new} \ln 2} - \dfrac{\sigma_l^2}{|h_l|^2}$. It should be note that threshold also can be determined in any other suitable way.

In some embodiments, the whole set of subchannels $S$ may be divided into three exclusive subsets $S_1$, $S_2$, and $S_3$, that are respectively specified as the above equations (17)-(19).

According to embodiments of the present disclosure, different procedures are designed to determine the power assignment $p_l^*(\lambda_{new})$ from the individual subchannel respective.

At block 730, the transmitting device 110 may determine a first lower bound and a second lower bound from the first subchannel set $S_1$ and the third subchannel set $S_3$, respectively. In some example embodiments with

$$r_l(p_l) = \log_2\left(1 + p_l |h_l|^2 / \sigma_l^2\right)$$, for $l \in S_1$, the first lower bound $\lambda'_{new,\min} = \max_{l \in S_1} \dfrac{1}{\left(\sigma_l^2 / |h_l|^2 + p_{l,0}\right) \ln 2}$, and

for $l \in S_3$, the second lower bound $\lambda''_{new,\min} = \max_{l \in S_3} \dfrac{1}{\left(\sigma_l^2 / |h_l|^2 + p_{l,b_l+1}\right) \ln 2}$.

At block 740, the transmitting device 110 may determine a first upper bound and a second upper bound from the second subchannel set $S_2$ and the third subchannel set $S_3$, respectively. For example embodiments with

$$r_l(p_l) = \log_2\left(1 + p_l |h_l|^2 / \sigma_l^2\right)$$, for $l \in S_2$, the first upper bound $\lambda'_{new,\max} = \min_{l \in S_2} \dfrac{1}{\left(\sigma_l^2 / |h_l|^2 + p_{l,N_l}\right) \ln 2}$, and

for $l \in S_3$, the second upper bound $\lambda''_{new,\max} = \min_{l \in S_3} \dfrac{1}{\left(\sigma_l^2 / |h_l|^2 + p_{l,b_l}\right) \ln 2}$.

At block 750, the transmitting device 110 may determine the lower bound of the equivalent range of the first Lagrange multiplier with the maximum of the first and the second lower bounds. In some example embodiments with $r_l(p_l) = \log_2\left(1 + p_l |h_l|^2 / \sigma_l^2\right)$, the lower bound of the equivalent range of the first Lagrange multiplier may be determined according to the following equation (21).

$$\lambda_{new,\min} = \max\left\{\lambda'_{new,\min}, \lambda''_{new,\min}\right\} \qquad\qquad \text{equation (21)}$$

At block 760, the transmitting device 110 may determine the upper bound of the equivalent range of the first Lagrange multiplier with the minimum of the first and the second upper bounds. In some example embodiments with $r_l(p_l) = \log_2\left(1 + p_l |h_l|^2 / \sigma_l^2\right)$, the upper bound of the equivalent range of the first Lagrange multiplier may be determined according to the following equation (22).

$$\lambda_{new,\max} = \min\left\{\lambda'_{new,\max}, \lambda''_{new,\max}\right\} \qquad\qquad \text{equation (22)}$$

With the method 700, the computation can be accelerated by exploiting the order of $A_l = \{p_{l,0}, p_{l,1}, \cdots, P_{l,N_l}\}$ and the concavity and separability of $r_l(p_l) = \log_2\left(1 + p_l |h_l|^2 / \sigma_l^2\right)$, avoiding searching over the whole set of $A_l$. It should be note that the equivalent range may also be determined in any other suitable way.

Return to Fig. 6, at block 660, the transmitting device 110 may update the first Lagrange multiplier and the first operating point based on the updated second and third Lagrange multipliers. In some embodiments, the operations in blocks 210-214 and blocks 610-660 may be performed iteratively with the updated second and third Lagrange multipliers, until an operating point more closer to the optimality is attained.

It should be note that the above-listed equations are provided merely for illustration, and are not intended to limit the present application, and any other suitable implementations can be adopted.

With the solution of the present disclosure, the searching process is significantly accelerated by creating a high-order convex searching method. An iterative method is invented to generate a sequence of diminishing convex regions that can rapidly converge to the optimal operating point. The approximation region can be either trigon or quadrangle, where an upper-bounded performance line is introduced to further decrease the approximation region. In contrast with the prior art, a high-order fitting curve is designed to approximate the convex hull of the operating points by making full use of knowledge implied by the approximation region. The second-order and third-order curve fitting methods based on quadratic and cubic Bezier curves, respectively are proposed.

Moreover, the derivative knowledge of fitting curve is exploited to predict the optimal Lagrange multiplier. During the iteration, the area of approximation region is reduced quickly until converging to the optimal operating points. The diminishing region provides a fast way to continue refining the approximation for the performance curve of the operating points, as well as the prediction for the optimal Lagrange multiplier. Besides, an effect of equivalent range is also addressed in the proposed solution, which avoids the unexpected termination ahead of optimality.

The inventor evaluates the optimality and complexity of proposed method through numerical experiment for OFDM system. The detailed simulation conditions are listed in Table 1. Each experiment corresponds to a frequency-selective fading channel realization, where the subchannel channels are drawn from the independent Rayleigh fading distributions.

Table 1: Simulation conditions

| Parameter | value |
|---|---|
| Number of subcarriers | 2048 |
| The integer bits per subchannel | 0, 1, 2, 3, 4, 5, 6, 7, 8, 9, 10 |
| Effective total transmission power | -80 dBm |
| Noise power | -140 dBm/Hz |
| Bandwidth of subchannel | 15 kHz |
| Bandwidth | 20 MHz |
| Parameter of Rayleigh distribution | 4 |

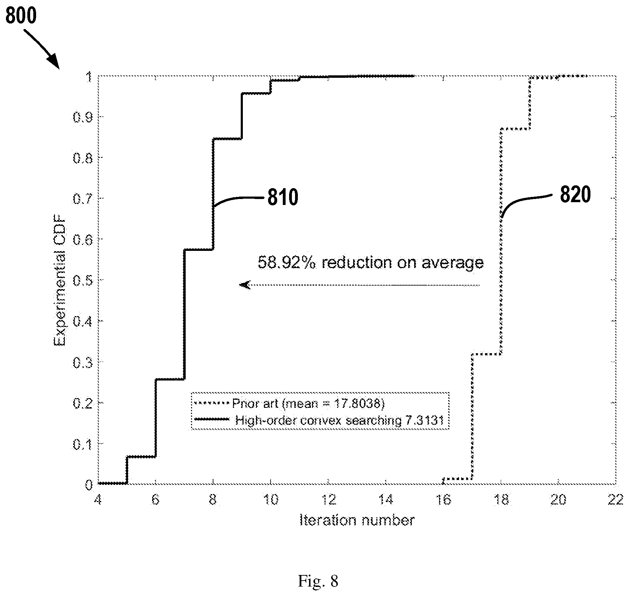

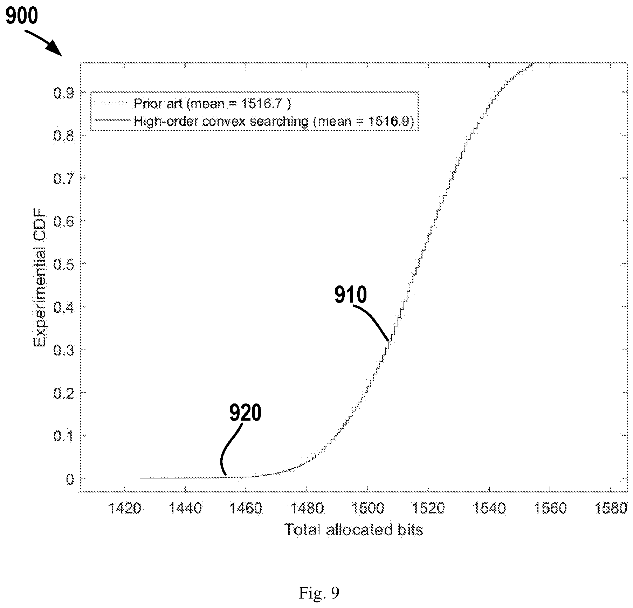

Fig. 8 illustrates an example comparison of computation costs between the prior art and the present solution through a CDF. Fig. 9 illustrates an example comparison of performance results between the prior art and the present solution through a CDF. Each CDF curve is generated by 10000 independent experiments. As shown in Fig. 8, 810 denotes the simulation result of the present solution in the computation cost, and 820 denotes the simulation result of the prior art in the computation cost, and the computation cost is evaluated in terms of iteration number. It shows that the proposed high-order convex searching is significantly superior over the prior art in computational efficiency. The iteration number is reduced from tens digit to units digit, saving 58.92% computation cost on average. The cost reduction is benefited from the use of high-order convex searching.

As shown in Fig. 9, 910 denotes the simulation result of the present solution in the performance, and 920 denotes the simulation result of the prior art in the performance. It can be seen from Fig. 9 that a negligible rate gain in total allocated bits can be observed with the present solution. This performance gain is due to the fact that the proposed solution can avoid the unexpected iteration termination ahead of optimality and always ensure an optimal bit loading.

In some embodiments, an apparatus (for example, the transmitting device 110) capable of performing the method 200 may comprise means for performing the respective steps of the method 200. The means may be implemented in any suitable form. For example, the means may be implemented in a circuitry or software module.

In some embodiments, the apparatus comprises: means for determining, at a transmitting device, based on a total power constraint of a set of subchannels between the transmitting device and a receiving device, channel gain and noise power of each of the set of subchannels, and a candidate set of discrete effective power assignments used for each of the set of subchannels, a polygon region comprising a set of discrete operating points each of which represents a rate-power budget pair determined by an optimal discrete power distribution over the set of subchannels with an associated Lagrange multiplier; means for determining a concave fitting curve in the polygon region to predict the convex hull of the set of the discrete operating points; means for determining a first Lagrange multiplier based on the fitting curve and the total power constraint; and means for determining, based on the first Lagrange multiplier, a first optimal discrete power distribution for the data transmission over the set of subchannels.

In some embodiments, means for determining the polygon region may comprise: means for determining an upper-bounded line through optimal continuous power allocation under the total power constraint such that all possible operating points locate below the upper-bounded line on rate-power budget plane; means for determining a second line based on a second Lagrange multiplier and a second operating point representing a second rate-power budget pair, the second operating point being determined based on the second Lagrange multiplier, and the second Lagrange multiplier being determined such that the power value of the second rate-power budget pair is less than the total power constraint; means for determining a third line based on a third Lagrange multiplier and a third operating point representing a third rate-power budget pair, the third operating point being determined based on the third Lagrange multiplier, and the third Lagrange multiplier being determined such that the power value of the third rate-power budget pair is more than the total power constraint; and means for determining a convex polygon region enclosed by the upper-bounded line, the second line, the third line, and a line connecting the second operating point and the third operating point.

In some embodiments, the second line is determined by a line through the second operating point whose slope equals the second Lagrange multiplier, and the third line is determined by a line through the third operating point whose slope equals the third Lagrange multiplier.

In some embodiments, the second Lagrange multiplier is determined by: sorting, in the nondecreasing order, discrete effective power assignments in the candidate set of discrete effective power assignments used for each of the set of subchannels; determining, for each of the set of subchannels, a value of rate change relative to the two smallest discrete effective power assignments for each of the set of subchannels; and determining the second Lagrange multiplier with the maximum value of rate change among the set of subchannels.

In some embodiments, the third Lagrange multiplier is determined by: sorting, in the nondecreasing order, discrete effective power assignments in the candidate set of discrete effective power assignments used for each of the set of subchannels; determining, for each of the set of subchannels, a value of rate change relative to the two largest discrete effective power assignments for each of the set of subchannels; and determining the third Lagrange multiplier with the minimum value of rate change among all the set of subchannels.

In some embodiments, means for determining the concave fitting curve may comprise: means for determining the shape of the polygon region based on the upper-bounded line and an intersection point of the second line and the third line; and means for determining the concave fitting curve based on the determined shape of the polygon region such that the second line and the third line are the tangents of the fitting curve at the second and third operating points, respectively.

In some embodiments, means for determining the concave fitting curve may comprise at least one of the following: means for determining the concave fitting curve by a quadratic Bezier curve controlled by a trigon determined by the second line, the third line and the line connecting the second operating point and the third operating point; or means for determining the concave fitting curve by a cubic Bezier curve controlled by a quadrangle determined by the upper-bounded line, the second line, the third line and the line connecting the second operating point and the third operating point.

In some embodiments, means for determining the first Lagrange multiplier may comprise: means for determining an intersection point between the concave fitting curve and a line determined by the total power constraint; and means for determining the first Lagrange multiplier with a derivative of the concave fitting curve at the intersection point.

In some embodiments, means for determining the first optimal discrete power distribution may comprise: means for sorting, in the nondecreasing order, discrete effective power assignments in the candidate set of discrete effective power assignments used for each of the set of subchannels; means for dividing, based on a threshold determined by the first Lagrange multiplier, the sorted candidate set of discrete effective power assignments into a first subchannel set, a second subchannel set, and a third subchannel set; means for determining the optimal power assignment, for a subchannel belong to the first subchannel set, by assigning the minimum discrete effective power assignment in the candidate set; means for determining the optimal power assignment, for a subchannel belong to the second subchannel set, by assigning the maximum discrete effective power assignment in the candidate set; and means for determining the optimal power assignment, for a subchannel belong to the third subchannel set, by choosing a desired one from two discrete effective power assignments that are close to the threshold.

In some embodiments, the apparatus may further comprises means for determining whether a power value of the first rate-power budget pair is one of the power value of the second rate-power budget pair represented by the second operating point, the total power constraint, and the power value of the third rate-power budget pair represented by the third operating point; and means for using, in response to the case that the power value of the first rate-power budget pair is one of the power value of the second rate-power budget pair, the total power constraint, and the power value of the third rate-power budget pair, the first optimal discrete power distribution for the data transmission over the set of subchannels between the transmitting device and the receiving device.

In some embodiments, the apparatus may further comprises means for updating, in response to the case that the power value of the first rate-power budget pair is not one of the power value of the second rate-power budget pair, the total power constraint, and the power value of the third rate-power budget pair, the second and third operating points with a first operating point representing a first rate-power budget pair where the power budget tends toward the total power constraint; means for updating a second Lagrange multiplier and a third Lagrange multiplier with an equivalent range of the first Lagrange multiplier, the second Lagrange multiplier being determined such that the power value of the second rate-power budget pair is less than the total power constraint, the third Lagrange multiplier being determined such that the power value of the third rate-power budget pair is more than the total power constraint, and the equivalent range of the first Lagrange multiplier causing the same first optimal discrete power distribution for data transmission and the same first operating point; and means for updating the first Lagrange multiplier and the first operating point based on the updated second and third Lagrange multipliers.

In some embodiments, the first operating point may be determined by summarizing the first optimal discrete power distribution and its caused rate distribution across the set of subchannels.

In some embodiments, means for updating the second Lagrange multiplier and the third Lagrange multiplier comprises means for replacing, in response to the power value of the first rate-power budget pair is smaller than the total power constraint, the second Lagrange multiplier with a lower bound of the equivalent range of the first Lagrange multiplier plus an arbitrary small positive; and means for replacing, in response to the power value of the first rate-power budget pair is larger than the total power constraint, the third Lagrange multiplier with an upper bound of the equivalent range of the first Lagrange multiplier.

In some embodiments, means for determining the equivalent range of the first Lagrange multiplier may comprise: means for sorting, in the nondecreasing order, discrete effective power assignments in the candidate set of discrete effective power assignments used for each of the set of subchannels; means for dividing, based on a threshold determined by the first Lagrange multiplier, the sorted candidate set of discrete effective power assignments into a first subchannel set, a second subchannel set, and a third subchannel set; means for determining a first lower bound and a second lower bound from the first subchannel set and the third subchannel set, respectively; means for determining a first upper bound and a second upper bound from the second subchannel set and the third subchannel set, respectively; means for determining the lower bound of the equivalent range of the first Lagrange multiplier with the maximum of the first and the second lower bounds; and means for determining the upper bound of the equivalent range of the first Lagrange multiplier with the minimum of the first and the second upper bounds.

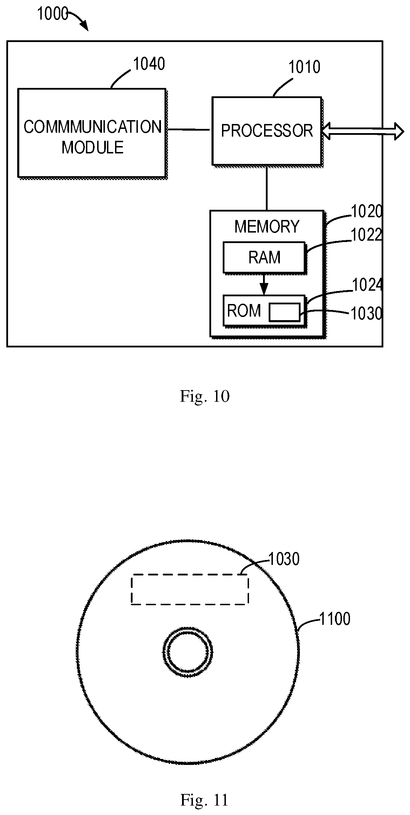

FIG. 10 is a simplified block diagram of a device 1000 that is suitable for implementing embodiments of the present disclosure. The device 1000 may be provided to implement the transmitting device, for example the transmitting device 110 as shown in Fig. 1. In some embodiments, the transmitting device may be a network device. In some alternative embodiments, the transmitting device may be a terminal device. As shown, the device 1000 includes one or more processors 1010, one or more memories 1020 coupled to the processor 1010, and one or more communication modules 1040 (such as, transmitters and/or receivers) coupled to the processor 1010.

The communication module 1040 is for bidirectional communications. The communication module 1040 has at least one antenna to facilitate communication. The communication interface may represent any interface that is necessary for communication with other network elements.

The processor 1010 may be of any type suitable to the local technical network and may include one or more of the following: general purpose computers, special purpose computers, microprocessors, digital signal processors (DSPs) and processors based on multicore processor architecture, as non-limiting examples. The device 1000 may have multiple processors, such as an application specific integrated circuit chip that is slaved in time to a clock which synchronizes the main processor.

The memory 1020 may include one or more non-volatile memories and one or more volatile memories. Examples of the non-volatile memories include, but are not limited to, a Read Only Memory (ROM) 1024, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 1022 and other volatile memories that will not last in the power-down duration.

A computer program 1030 includes computer executable instructions that are executed by the associated processor 1010. The program 1030 may be stored in the ROM 1024. The processor 1010 may perform any suitable actions and processing by loading the program 1030 into the RAM 1022.

The embodiments of the present disclosure may be implemented by means of the program 1030 so that the device 1000 may perform any process of the disclosure as discussed with reference to Figs. 2 to 7. The embodiments of the present disclosure may also be implemented by hardware or by a combination of software and hardware.

In some embodiments, the program 1030 may be tangibly contained in a computer readable medium which may be included in the device 1000 (such as in the memory 1020) or other storage devices that are accessible by the device 1000. The device 1000 may load the program 1030 from the computer readable medium to the RAM 1022 for execution. The computer readable medium may include any types of tangible non-volatile storage, such as ROM, EPROM, a flash memory, a hard disk, CD, DVD, and the like. FIG. 11 shows an example of the computer readable medium 1100 in form of CD or DVD. The computer readable medium has the program 1030 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the methods 200-400 and 600-700 as described above with reference to FIG. 2-4 and 6-7. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

**Claims**

1. A method of data transmission, comprising:

   determining (210), at a transmitting device (110), based on a total power constraint of a set of subchannels between the transmitting device and a receiving device, channel gain and noise power of each of the set of subchannels, and a candidate set of discrete effective power assignments used for each of the set of subchannels, a polygon region comprising a set of discrete operating points each of which represents a rate-power budget pair determined by an optimal discrete power distribution over the set of subchannels with an associated Lagrange multiplier;
   determining (220) a concave fitting curve in the polygon region to predict the convex hull of the set of the discrete operating points;
   determining (230) a first Lagrange multiplier based on the fitting curve and the total power constraint; and
   determining (240), based on the first Lagrange multiplier, a first optimal discrete power distribution for the data transmission over the set of subchannels.

**2.** The method of claim 1, wherein determining (210) the polygon region comprises:

determining (310) an upper-bounded line through optimal continuous power allocation under the total power constraint such that all possible operating points locate below the upper-bounded line on rate-power budget plane;

determining (320) a second line based on a second Lagrange multiplier and a second operating point representing a second rate-power budget pair, the second operating point being determined based on the second Lagrange multiplier, and the second Lagrange multiplier being determined such that the power value of the second rate-power budget pair is less than the total power constraint;

determining (330) a third line based on a third Lagrange multiplier and a third operating point representing a third rate-power budget pair, the third operating point being determined based on the third Lagrange multiplier, and the third Lagrange multiplier being determined such that the power value of the third rate-power budget pair is more than the total power constraint; and

determining (340) a convex polygon region enclosed by the upper-bounded line, the second line, the third line, and a line connecting the second operating point and the third operating point, wherein for example the second line is determined by a line through the second operating point whose slope equals the second Lagrange multiplier, and the third line is determined by a line through the third operating point whose slope equals the third Lagrange multiplier.

**3.** The method of claim 2, further comprising determining the second and third Lagrange multipliers by:

sorting (410), in the nondecreasing order, discrete effective power assignments in the candidate set of discrete effective power assignments used for each of the set of subchannels;

determining, for each of the set of subchannels, a first value of rate change relative to the two smallest discrete effective power assignments for each of the set of subchannels;

determining the second Lagrange multiplier with the maximum first value of rate change among the set of subchannels;

determining, for each of the set of subchannels, a second value of rate change relative to the two largest discrete effective power assignments for each of the set of subchannels; and

determining the third Lagrange multiplier with the minimum second value of rate change among all the set of subchannels.

**4.** The method of claim 2, wherein determining (220) the concave fitting curve comprises:

determining the shape of the polygon region based on the upper-bounded line and an intersection point of the second line and the third line; and

determining the concave fitting curve based on the determined shape of the polygon region such that the second line and the third line are the tangents of the fitting curve at the second and third operating points, respectively.

**5.** The method of claim 4, wherein determining (220) the concave fitting curve comprises at least one of the following:

determining the concave fitting curve by a quadratic Bezier curve controlled by a trigon determined by the second line, the third line and the line connecting the second operating point and the third operating point; or

determining the concave fitting curve by a cubic Bezier curve controlled by a quadrangle determined by the upper-bounded line, the second line, the third line and the line connecting the second operating point and the third operating point.

**6.** The method of claim 1, wherein determining (230) the first Lagrange multiplier comprises:

determining an intersection point between the concave fitting curve and a line determined by the total power constraint; and

determining the first Lagrange multiplier with a derivative of the concave fitting curve at the intersection point.

**7.** The method of claim 1, wherein determining (240) the first optimal discrete power distribution comprises:

sorting, in the nondecreasing order, discrete effective power assignments in the candidate set of discrete effective power assignments used for each of the set of subchannels;

dividing, based on a threshold determined by the first Lagrange multiplier, the sorted candidate set of discrete effective power assignments into a first subchannel set, a second subchannel set, and a third subchannel set; determining the optimal power assignment, for a subchannel belong to the first subchannel set, by assigning the minimum discrete effective power assignment in the candidate set; determining the optimal power assignment, for a subchannel belong to the second subchannel set, by assigning the maximum discrete effective power assignment in the candidate set; and determining the optimal power assignment, for a subchannel belong to the third subchannel set, by choosing a desired one from two discrete effective power assignments that are close to the threshold.

8. The method of claim 1, further comprising:

determining (610) a first operating point ($r(P_{new}),P_{new}$) representing a first rate-power budget pair where the power budget tends toward the total power constraint by summarizing the first optimal discrete power distribution and its caused rate distribution across the set of subchannels, wherein the first operating point ($r(P_{new}),P_{new}$) can be computed by the following equation

$$P_{new} = \sum_{l \in S} p_l^*(\lambda_{new})$$

$$r(P_{new}) = \sum_{l \in S} r_l \left( p_l^*(\lambda_{new}) \right)$$

, where

$$p_l^*(\lambda_{new}) = \arg \max_{p_l \in A_l, \ l \in S} \sum_{l \in S} r_l(p_l) - \lambda_{new} \sum_{l \in S} p_l \ ;$$

determining (620) whether a power value of the first rate-power budget pair is one of the power value of the second rate-power budget pair represented by the second operating point, the total power constraint, and the power value of the third rate-power budget pair represented by the third operating point; in response to the case that the power value of the first rate-power budget pair is one of the power value of the second rate-power budget pair, the total power constraint, and the power value of the third rate-power budget pair, using (630) the first optimal discrete power distribution for the data transmission over the set of subchannels between the transmitting device and the receiving device; and in response to the case that the power value of the first rate-power budget pair is not one of the power value of the second rate-power budget pair, the total power constraint, and the power value of the third rate-power budget pair,

updating (640) the second and third operating points with the first operating point; updating (650) a second Lagrange multiplier and a third Lagrange multiplier with an equivalent range of the first Lagrange multiplier, the second Lagrange multiplier being determined such that the power value of the second rate-power budget pair is less than the total power constraint, the third Lagrange multiplier being determined such that the power value of the third rate-power budget pair is more than the total power constraint, and the equivalent range of the first Lagrange multiplier causing the same first optimal discrete power distribution for data transmission and the same first operating point; and updating (660) the first Lagrange multiplier and the first operating point based on the updated second and third Lagrange multipliers, wherein for example updating the second Lagrange multiplier and the third Lagrange multiplier comprises:

in response to the power value of the first rate-power budget pair is smaller than the total power constraint, replacing the second Lagrange multiplier with a lower bound of the equivalent range of the first Lagrange multiplier plus an arbitrary small positive; and in response to the power value of the first rate-power budget pair is larger than the total power constraint, replacing the third Lagrange multiplier with an upper bound of the equivalent range of the first Lagrange multiplier.

9. The method of claim 8, wherein determining the equivalent range of the first Lagrange multiplier comprises:

sorting (710), in the nondecreasing order, discrete effective power assignments in the candidate set of discrete effective power assignments used for each of the set of subchannels; dividing (720), based on a threshold determined by the first Lagrange multiplier, the sorted candidate set of discrete effective power assignments into a first subchannel set, a second subchannel set, and a third subchannel set; determining (730) a first lower bound and a second lower bound from the first subchannel set and the third subchannel set, respectively;

determining (740) a first upper bound and a second upper bound from the second subchannel set and the third subchannel set, respectively;

determining (750) the lower bound of the equivalent range of the first Lagrange multiplier with the maximum of the first and the second lower bounds; and

determining (760) the upper bound of the equivalent range of the first Lagrange multiplier with the minimum of the first and the second upper bounds.

10. A transmitting device (110), comprising:

at least one processor (1010); and
at least one memory (1020) including computer program codes (1030);
the at least one memory (1020) and the computer program codes (1030) are configured to, with the at least one processor (1010), cause the transmitting device (110) to:

determine (210), based on a total power constraint of a set of subchannels between the transmitting device and a receiving device, channel gain and noise power of each of the set of subchannels, and a candidate set of discrete effective power assignments used for each of the set of subchannels, a polygon region comprising a set of discrete operating points each of which represents a rate-power budget pair determined by an optimal discrete power distribution over the set of subchannels with an associated Lagrange multiplier;

determine (220) a concave fitting curve in the polygon region to predict the convex hull of the set of the discrete operating points;

determine (230) a first Lagrange multiplier based on the fitting curve and the total power constraint; and

determine (240), based on the first Lagrange multiplier, a first optimal discrete power distribution for the data transmission over the set of subchannels.

11. The transmitting device (110) of claim 10, wherein the transmitting device (110) is caused to determine the polygon region by:

determining (310) an upper-bounded line through optimal continuous power allocation under the total power constraint such that all possible operating points locate below the upper-bounded line on rate-power budget plane;

determining (320) a second line based on a second Lagrange multiplier and a second operating point representing a second rate-power budget pair, the second operating point being determined based on the second Lagrange multiplier, and the second Lagrange multiplier being determined such that the power value of the second rate-power budget pair is less than the total power constraint;

determining (330) a third line based on a third Lagrange multiplier and a third operating point representing a third rate-power budget pair, the third operating point being determined based on the third Lagrange multiplier, and the third Lagrange multiplier being determined such that the power value of the third rate-power budget pair is more than the total power constraint; and

determining (340) a convex polygon region enclosed by the upper-bounded line, the second line, the third line, and a line connecting the second operating point and the third operating point, wherein for example the second line is determined by a line through the second operating point whose slope equals the second Lagrange multiplier, and the third line is determined by a line through the third operating point whose slope equals the third Lagrange multiplier.

12. The transmitting device (110) of claim 11, wherein the transmitting device (110) is further caused to determine the second and third Lagrange multipliers by:

sorting, in the nondecreasing order, discrete effective power assignments in the candidate set of discrete effective power assignments used for each of the set of subchannels;

determining, for each of the set of subchannels, a first value of rate change relative to the two smallest discrete effective power assignments for each of the set of subchannels;

determining the second Lagrange multiplier with the maximum first value of rate change among the set of subchannels;

determining, for each of the set of subchannels, a second value of rate change relative to the two largest discrete effective power assignments for each of the set of subchannels; and

determining the third Lagrange multiplier with the minimum second value of rate change among all the set of subchannels.

13. The transmitting device (110) of claim 11, wherein the transmitting device (110) is caused to determine the concave fitting curve by:

   determining the shape of the polygon region based on the upper-bounded line and an intersection point of the second line and the third line; and
   determining the concave fitting curve based on the determined shape of the polygon region such that the second line and the third line are the tangents of the fitting curve at the second and third operating points, respectively.

14. The transmitting device (110) of claim 13, wherein the transmitting device (110) is caused to determine the concave fitting curve by at least one of the following:

   determining the concave fitting curve by a quadratic Bezier curve controlled by a trigon determined by the second line, the third line and the line connecting the second operating point and the third operating point; or
   determining the concave fitting curve by a cubic Bezier curve controlled by a quadrangle determined by the upper-bounded line, the second line, the third line and the line connecting the second operating point and the third operating point.

15. The transmitting device (110) of claim 10, wherein the transmitting device (110) is caused to determine the first Lagrange multiplier by:

   determining an intersection point between the concave fitting curve and a line determined by the total power constraint; and
   determining the first Lagrange multiplier with a derivative of the concave fitting curve at the intersection point.

16. The transmitting device (110) of claim 10, wherein the transmitting device (110) is caused to determine the first optimal discrete power distribution by:

   sorting (410), in the nondecreasing order, discrete effective power assignments in the candidate set of discrete effective power assignments used for each of the set of subchannels;
   dividing (420), based on a threshold determined by the first Lagrange multiplier, the sorted candidate set of discrete effective power assignments into a first subchannel set, a second subchannel set, and a third subchannel set;
   determining (430) the optimal power assignment, for a subchannel belong to the first subchannel set, by assigning the minimum discrete effective power assignment in the candidate set;
   determining (440) the optimal power assignment, for a subchannel belong to the second subchannel set, by assigning the maximum discrete effective power assignment in the candidate set; and
   determining (450) the optimal power assignment, for a subchannel belong to the third subchannel set, by choosing a desired one from two discrete effective power assignments that are close to the threshold.

17. The transmitting device (110) of claim 10, wherein the transmitting device (110) is further caused to:

   determine (610) a first operating point representing a first rate-power budget pair where the power budget tends toward the total power constraint by summarizing the first optimal discrete power distribution and its caused rate distribution across the set of subchannels, wherein the first operating point ($r(P_{new}), P_{new}$) can be computed by the

   following equation
   $$P_{new} = \sum_{l \in S} p_l^*(\lambda_{new})$$
   $$r(P_{new}) = \sum_{l \in S} r_l\left(p_l^*(\lambda_{new})\right)$$
   , where $p_l^*(\lambda_{new}) = \arg \max_{p_l \in A_l,\ l \in S} \sum_{l \in S} r_l(p_l) - \lambda_{new} \sum_{l \in S} p_l$ ;

   determine (620) whether a power value of the first rate-power budget pair is one of the power value of the second rate-power budget pair represented by the second operating point, the total power constraint, and the power value of the third rate-power budget pair represented by the third operating point;
   in response to the case that the power value of the first rate-power budget pair is one of the power value of the second rate-power budget pair, the total power constraint, and the power value of the third rate-power budget pair, use (630) the first optimal discrete power distribution for the data transmission over the set of subchannels between the transmitting device and the receiving device; and
   in response to the case that the power value of the first rate-power budget pair is not one of the power value of the second rate-power budget pair, the total power constraint, and the power value of the third rate-power budget pair,

update (640) the second and third operating points with the first operating point;

update (650) a second Lagrange multiplier and a third Lagrange multiplier with an equivalent range of the first Lagrange multiplier, the second Lagrange multiplier being determined such that the power value of the second rate-power budget pair is less than the total power constraint, the third Lagrange multiplier being determined such that the power value of the third rate-power budget pair is more than the total power constraint, and the equivalent range of the first Lagrange multiplier causing the same first optimal discrete power distribution for data transmission and the same first operating point; and

update (660) the first Lagrange multiplier and the first operating point based on the updated second and third Lagrange multipliers, wherein for example the transmitting device is caused to update the second Lagrange multiplier and the third Lagrange multiplier by:

> in response to the power value of the first rate-power budget pair is smaller than the total power constraint, replacing the second Lagrange multiplier with a lower bound of the equivalent range of the first Lagrange multiplier plus an arbitrary small positive; and
>
> in response to the power value of the first rate-power budget pair is larger than the total power constraint, replacing the third Lagrange multiplier with an upper bound of the equivalent range of the first Lagrange multiplier.

**18.** The transmitting device (110) of claim 10, wherein the transmitting device (110) is caused to determine the equivalent range of the first Lagrange multiplier by:

> sorting, in the nondecreasing order, discrete effective power assignments in the candidate set of discrete effective power assignments used for each of the set of subchannels;
>
> dividing, based on a threshold determined by the first Lagrange multiplier, the sorted candidate set of discrete effective power assignments into a first subchannel set, a second subchannel set, and a third subchannel set;
>
> determining a first lower bound and a second lower bound from the first subchannel set and the third subchannel set, respectively;
>
> determining a first upper bound and a second upper bound from the second subchannel set and the third subchannel set, respectively;
>
> determining the lower bound of the equivalent range of the first Lagrange multiplier with the maximum of the first and the second lower bounds; and
>
> determining the upper bound of the equivalent range of the first Lagrange multiplier with the minimum of the first and the second upper bounds.

**19.** The transmitting device (110) of any of the claims 10 to 18, wherein the transmitting device (110) is a terminal device

**20.** A non-transitory computer readable medium (1100) comprising program instructions (1030) for causing an apparatus to perform the method according to any of claims 1 to 9.

**Patentansprüche**

**1.** Verfahren zur Datenübertragung, umfassend:

> das Bestimmen (210), an einer Sendevorrichtung (110), auf der Grundlage einer Gesamtleistungsbeschränkung eines Satzes von Unterkanälen zwischen der Sendevorrichtung und einer Empfangsvorrichtung, eines Kanalgewinns und einer Rauschleistung jedes des Satzes von Unterkanälen, und eines Kandidatsatzes von diskreten effektiven Leistungszuweisungen, der für jeden des Satzes von Unterkanälen verwendet wird,
>
> eines Polygonbereichs, der einen Satz von diskreten Betriebspunkten umfasst, von denen jeder ein Rate-Leistungsbudget-Paar darstellt, das durch eine optimale diskrete Leistungsverteilung über den Satz von Unterkanälen mit einem zugehörigen Lagrange-Multiplikator bestimmt wird;
>
> das Bestimmen (220) einer konkaven Anpassungskurve im Polygonbereich, um die konvexe Hülle des Satzes der diskreten Betriebspunkte vorherzusagen;
>
> das Bestimmen (230) eines ersten Lagrange-Multiplikators auf der Grundlage der Anpassungskurve und der Gesamtleistungsbeschränkung; und
>
> das Bestimmen (240), auf der Grundlage des ersten Lagrange-Multiplikators, einer ersten optimalen diskreten Leistungsverteilung für die Datenübertragung über den Satz von Unterkanälen.

2. Verfahren nach Anspruch 1, wobei das Bestimmen (210) des Polygonbereichs umfasst:

   das Bestimmen (310) einer oberen Begrenzungslinie durch optimale kontinuierliche Leistungszuweisung unter der Gesamtleistungsbeschränkung, so dass sich alle möglichen Betriebspunkte unterhalb der oberen Begrenzungslinie auf der Rate-Leistungsbudget-Ebene befinden;
   das Bestimmen (320) einer zweiten Linie auf der Grundlage eines zweiten Lagrange-Multiplikators und eines zweiten Betriebspunkts, der ein zweites Rate-Leistungsbudget-Paar darstellt, wobei der zweite Betriebspunkt auf der Grundlage des zweiten Lagrange-Multiplikators bestimmt wird und der zweite Lagrange-Multiplikator so bestimmt wird, dass der Leistungswert des zweiten Rate-Leistungsbudget-Paars geringer ist als die Gesamtleistungsbeschränkung;
   das Bestimmen (330) einer dritten Linie auf der Grundlage eines dritten Lagrange-Multiplikators und eines dritten Betriebspunkts, der ein drittes Rate-Leistungsbudget-Paar darstellt, wobei der dritte Betriebspunkt auf der Grundlage des dritten Lagrange-Multiplikators bestimmt wird und der dritte Lagrange-Multiplikator so bestimmt wird, dass der Leistungswert des dritten Rate-Leistungsbudget-Paars größer ist als die Gesamtleistungsbeschränkung; und
   das Bestimmen (340) eines konvexen Polygonbereichs, der von der oberen Begrenzungslinie, der zweiten Linie, der dritten Linie und einer Linie, die den zweiten Betriebspunkt und den dritten Betriebspunkt verbindet, eingeschlossen ist, wobei beispielsweise die zweite Linie durch eine Linie durch den zweiten Betriebspunkt bestimmt wird, deren Steigung gleich dem zweiten Lagrange-Multiplikator ist, und die dritte Linie durch eine Linie durch den dritten Betriebspunkt bestimmt wird, deren Steigung gleich dem dritten Lagrange-Multiplikator ist.

3. Verfahren nach Anspruch 2, ferner umfassend das Bestimmen der zweiten und dritten Lagrange-Multiplikatoren durch:

   das Sortieren (410), in nicht absteigender Reihenfolge, von diskreten effektiven Leistungszuweisungen im Kandidatensatz von diskreten effektiven Leistungszuweisungen, der für jeden des Satzes von Unterkanälen verwendet wird;
   das Bestimmen, für jeden des Satzes von Unterkanälen, eines ersten Werts der Ratenänderung relativ zu den zwei kleinsten diskreten effektiven Leistungszuweisungen für jeden des Satzes von Unterkanälen;
   das Bestimmen des zweiten Lagrange-Multiplikators mit dem maximalen ersten Wert der Ratenänderung unter dem Satz von Unterkanälen;
   das Bestimmen, für jeden des Satzes von Unterkanälen, eines zweiten Werts der Ratenänderung relativ zu den zwei größten diskreten effektiven Leistungszuweisungen für jeden des Satzes von Unterkanälen; und
   das Bestimmen des dritten Lagrange-Multiplikators mit dem minimalen zweiten Wert der Ratenänderung unter dem gesamten Satz von Unterkanälen.

4. Verfahren nach Anspruch 2, wobei das Bestimmen (220) der konkaven Anpassungskurve umfasst:

   das Bestimmen der Form des Polygonbereichs auf der Grundlage der oberen Begrenzungslinie und eines Schnittpunkts der zweiten Linie und der dritten Linie; und
   das Bestimmen der konkaven Anpassungskurve auf der Grundlage der bestimmten Form des Polygonbereichs, so dass die zweite Linie und die dritte Linie die Tangenten der Anpassungskurve am zweiten bzw. dritten Betriebspunkt sind.

5. Verfahren nach Anspruch 4, wobei das Bestimmen (220) der konkaven Anpassungskurve mindestens eines der Folgenden umfasst:

   das Bestimmen der konkaven Anpassungskurve durch eine quadratische Bézier-Kurve, die durch ein Trigon gesteuert wird, das durch die zweite Linie, die dritte Linie und die Linie bestimmt wird, die den zweiten Betriebspunkt und den dritten Betriebspunkt verbindet; oder
   das Bestimmen der konkaven Anpassungskurve durch eine kubische Bézier-Kurve, die durch ein Quadrangle gesteuert wird, das durch die obere Begrenzungslinie, die zweite Linie, die dritte Linie und die Linie bestimmt wird, die den zweiten Betriebspunkt und den dritten Betriebspunkt verbindet.

6. Verfahren nach Anspruch 1, wobei das Bestimmen (230) des ersten Lagrange-Multiplikators umfasst:

   das Bestimmen eines Schnittpunkts zwischen der konkaven Anpassungskurve und einer Linie, die durch die Gesamtleistungsbeschränkung bestimmt wird; und

das Bestimmen des ersten Lagrange-Multiplikators mit einer Ableitung der konkaven Anpassungskurve am Schnittpunkt.

7. Verfahren nach Anspruch 1, wobei das Bestimmen (240) der ersten optimalen diskreten Leistungsverteilung umfasst:

das Sortieren, in nicht absteigender Reihenfolge, von diskreten effektiven Leistungszuweisungen im Kandidatensatz von diskreten effektiven Leistungszuweisungen, der für jeden des Satzes von Unterkanälen verwendet wird;

das Unterteilen, auf der Grundlage eines durch den ersten Lagrange-Multiplikator bestimmten Schwellenwerts, des sortierten Kandidatensatzes von diskreten effektiven Leistungszuweisungen in einen ersten Unterkanalensatz, einen zweiten Unterkanalensatz und einen dritten Unterkanalensatz;

das Bestimmen der optimalen Leistungszuweisung für einen Unterkanal, der zum ersten Unterkanalensatz gehört, durch Zuweisen der minimalen diskreten effektiven Leistungszuweisung im Kandidatensatz;

das Bestimmen der optimalen Leistungszuweisung für einen Unterkanal, der zum zweiten Unterkanalensatz gehört, durch Zuweisen der maximalen diskreten effektiven Leistungszuweisung im Kandidatensatz; und

das Bestimmen der optimalen Leistungszuweisung für einen Unterkanal, der zum dritten Unterkanalensatz gehört, durch Auswählen einer gewünschten aus zwei diskreten effektiven Leistungszuweisungen, die nahe am Schwellenwert liegen.

8. Verfahren nach Anspruch 1, ferner umfassend:

das Bestimmen (610) eines ersten Betriebspunkts (*r(Pnew), Pnew*), der ein erstes Rate-Leistungsbudget-Paar darstellt, bei dem das Leistungsbudget zur Gesamtleistungsbeschränkung tendiert, durch Zusammenfassen der ersten optimalen diskreten Leistungsverteilung und ihrer verursachten Ratenverteilung über den Satz von Unterkanälen, wobei der erste Betriebspunkt (*r(Pnew), Pnew*) durch die folgende Gleichung berechnet werden kann

$$P_{new} = \sum_{l \in S} p_l^*(\lambda_{new})$$

$$r(P_{new}) = \sum_{l \in S} r_l \left( p_l^*(\lambda_{new}) \right)'$$

wobei

$$p_l^*(\lambda_{new}) = \arg \max_{p_l \in A_l, \ l \in S} \sum_{l \in S} r_l(p_l) - \lambda_{new} \sum_{l \in S} p_l \ ;$$

das Bestimmen (620), ob ein Leistungswert des ersten Rate-Leistungsbudget-Paars einer von dem Leistungswert des zweiten Rate-Leistungsbudget-Paars, dargestellt durch den zweiten Betriebspunkt, der Gesamtleistungsbeschränkung und dem Leistungswert des dritten Rate-Leistungsbudget-Paars, dargestellt durch den dritten Betriebspunkt, ist;

als Reaktion auf den Fall, dass der Leistungswert des ersten Rate-Leistungsbudget-Paars einer von dem Leistungswert des zweiten Rate-Leistungsbudget-Paars, der Gesamtleistungsbeschränkung und dem Leistungswert des dritten Rate-Leistungsbudget-Paars ist, Verwenden (630) der ersten optimalen diskreten Leistungsverteilung für die Datenübertragung über den Satz von Unterkanälen zwischen der Sendevorrichtung und der Empfangsvorrichtung, und

als Reaktion auf den Fall, dass der Leistungswert des ersten Rate-Leistungsbudget-Paars nicht einer von dem Leistungswert des zweiten Rate-Leistungsbudget-Paars, der Gesamtleistungsbeschränkung und dem Leistungswert des dritten Rate-Leistungsbudget-Paars ist,

Aktualisieren (640) der zweiten und dritten Betriebspunkte mit dem ersten Betriebspunkt;

Aktualisieren (650) eines zweiten Lagrange-Multiplikators und eines dritten Lagrange-Multiplikators mit einem äquivalenten Bereich des ersten Lagrange-Multiplikators, wobei der zweite Lagrange-Multiplikator so bestimmt wird, dass der Leistungswert des zweiten Rate-Leistungsbudget-Paars geringer ist als die Gesamtleistungsbeschränkung, wobei der dritte Lagrange-Multiplikator so bestimmt wird, dass der Leistungswert des dritten Rate-Leistungsbudget-Paars größer ist als die Gesamtleistungsbeschränkung, und wobei der äquivalente Bereich des ersten Lagrange-Multiplikators dieselbe erste optimale diskrete Leistungsverteilung für die Datenübertragung und denselben ersten Betriebspunkt verursacht; und

Aktualisieren (660) des ersten Lagrange-Multiplikators und des ersten Betriebspunkts auf der Grundlage der aktualisierten zweiten und dritten Lagrange-Multiplikatoren, wobei beispielsweise das Aktualisieren des zweiten Lagrange-Multiplikators und des dritten Lagrange-Multiplikators umfasst:

als Reaktion darauf, dass der Leistungswert des ersten Rate-Leistungsbudget-Paars kleiner ist als die Gesamtleistungsbeschränkung, Ersetzen des zweiten Lagrange-Multiplikators durch eine untere Grenze des äquivalenten Bereichs des ersten Lagrange-Multiplikators plus eine beliebig kleine positive Zahl; und

als Reaktion darauf, dass der Leistungswert des ersten Rate-Leistungsbudget-Paars größer ist als die Gesamtleistungsbeschränkung, Ersetzen des dritten Lagrange-Multiplikators durch eine obere Grenze des äquivalenten Bereichs des ersten Lagrange-Multiplikators.

9. Verfahren nach Anspruch 8, wobei das Bestimmen des äquivalenten Bereichs des ersten Lagrange-Multiplikators umfasst:

das Sortieren (710), in nicht absteigender Reihenfolge, von diskreten effektiven Leistungszuweisungen im Kandidatensatz von diskreten effektiven Leistungszuweisungen, der für jeden des Satzes von Unterkanälen verwendet wird;

das Unterteilen (720), auf der Grundlage eines durch den ersten Lagrange-Multiplikator bestimmten Schwellenwerts, des sortierten Kandidatensatzes von diskreten effektiven Leistungszuweisungen in einen ersten Unterkanalensatz, einen zweiten Unterkanalensatz und einen dritten Unterkanalensatz;

das Bestimmen (730) einer ersten unteren Grenze und einer zweiten unteren Grenze aus dem ersten Unterkanalensatz bzw. dem dritten Unterkanalensatz;

das Bestimmen (740) einer ersten oberen Grenze und einer zweiten oberen Grenze aus dem zweiten Unterkanalensatz bzw. dem dritten Unterkanalensatz;

das Bestimmen (750) der unteren Grenze des äquivalenten Bereichs des ersten Lagrange-Multiplikators mit dem Maximum der ersten und der zweiten unteren Grenze; und

das Bestimmen (760) der oberen Grenze des äquivalenten Bereichs des ersten Lagrange-Multiplikators mit dem Minimum der ersten und der zweiten oberen Grenze.

10. Sendevorrichtung (110), umfassend:

mindestens einen Prozessor (1010); und

mindestens einen Speicher (1020), der Computerprogrammcodes (1030) enthält;

wobei der mindestens eine Speicher (1020) und die Computerprogrammcodes (1030) konfiguriert sind, um mit dem mindestens einen Prozessor (1010) die Sendevorrichtung (110) zu veranlassen:

zu bestimmen (210), auf der Grundlage einer Gesamtleistungsbeschränkung eines Satzes von Unterkanälen zwischen der Sendevorrichtung und einer Empfangsvorrichtung, eines Kanalgewinns und einer Rauschleistung jedes des Satzes von Unterkanälen, und eines Kandidatensatzes von diskreten effektiven Leistungszuweisungen, der für jeden des Satzes von Unterkanälen verwendet wird, einen Polygonbereich, der einen Satz von diskreten Betriebspunkten umfasst, von denen jeder ein Rate-Leistungsbudget-Paar darstellt, das durch eine optimale diskrete Leistungsverteilung über den Satz von Unterkanälen mit einem zugehörigen Lagrange-Multiplikator bestimmt wird;

zu bestimmen (220) eine konkave Anpassungskurve im Polygonbereich, um die konvexe Hülle des Satzes der diskreten Betriebspunkte vorherzusagen;

zu bestimmen (230) einen ersten Lagrange-Multiplikator auf der Grundlage der Anpassungskurve und der Gesamtleistungsbeschränkung; und

zu bestimmen (240), auf der Grundlage des ersten Lagrange-Multiplikators, eine erste optimale diskrete Leistungsverteilung für die Datenübertragung über den Satz von Unterkanälen.

11. Sendevorrichtung (110) nach Anspruch 10, wobei die Sendevorrichtung (110) veranlasst wird, den Polygonbereich zu bestimmen durch:

Bestimmen (310) einer oberen Begrenzungslinie durch optimale kontinuierliche Leistungszuweisung unter der Gesamtleistungsbeschränkung, so dass sich alle möglichen Betriebspunkte unterhalb der oberen Begrenzungslinie auf der Rate-Leistungsbudget-Ebene befinden;

Bestimmen (320) einer zweiten Linie auf der Grundlage eines zweiten Lagrange-Multiplikators und eines zweiten Betriebspunkts, der ein zweites Rate-Leistungsbudget-Paar darstellt, wobei der zweite Betriebspunkt auf der Grundlage des zweiten Lagrange-Multiplikators bestimmt wird und der zweite Lagrange-Multiplikator so bestimmt wird, dass der Leistungswert des zweiten Rate-Leistungsbudget-Paars geringer ist als die Gesamtleistungsbeschränkung;

Bestimmen (330) einer dritten Linie auf der Grundlage eines dritten Lagrange-Multiplikators und eines dritten Betriebspunkts, der ein drittes Rate-Leistungsbudget-Paar darstellt, wobei der dritte Betriebspunkt auf der Grundlage des dritten Lagrange-Multiplikators bestimmt wird und der dritte Lagrange-Multiplikator so bestimmt wird, dass der Leistungswert des dritten Rate-Leistungsbudget-Paars größer ist als die Gesamtleistungsbeschränkung; und

Bestimmen (340) eines konvexen Polygonbereichs, der von der oberen Begrenzungslinie, der zweiten Linie, der dritten Linie und einer Linie, die den zweiten Betriebspunkt und den dritten Betriebspunkt verbindet, eingeschlossen ist, wobei beispielsweise die zweite Linie durch eine Linie durch den zweiten Betriebspunkt bestimmt wird, deren Steigung gleich dem zweiten Lagrange-Multiplikator ist, und die dritte Linie durch eine Linie durch den dritten Betriebspunkt bestimmt wird, deren Steigung gleich dem dritten Lagrange-Multiplikator ist.

12. Sendevorrichtung (110) nach Anspruch 11, wobei die Sendevorrichtung (110) ferner veranlasst wird, die zweiten und dritten Lagrange-Multiplikatoren zu bestimmen durch:

Sortieren, in nicht absteigender Reihenfolge, von diskreten effektiven Leistungszuweisungen im Kandidatensatz von diskreten effektiven Leistungszuweisungen, der für jeden des Satzes von Unterkanälen verwendet wird;

Bestimmen, für jeden des Satzes von Unterkanälen, eines ersten Werts der Ratenänderung relativ zu den zwei kleinsten diskreten effektiven Leistungszuweisungen für jeden des Satzes von Unterkanälen;

Bestimmen des zweiten Lagrange-Multiplikators mit dem maximalen ersten Wert der Ratenänderung unter dem Satz von Unterkanälen;

Bestimmen, für jeden des Satzes von Unterkanälen, eines zweiten Werts der Ratenänderung relativ zu den zwei größten diskreten effektiven Leistungszuweisungen für jeden des Satzes von Unterkanälen; und

Bestimmen des dritten Lagrange-Multiplikators mit dem minimalen zweiten Wert der Ratenänderung unter dem gesamten Satz von Unterkanälen.

13. Sendevorrichtung (110) nach Anspruch 11, wobei die Sendevorrichtung (110) veranlasst wird, die konkave Anpassungskurve zu bestimmen durch:

Bestimmen der Form des Polygonbereichs auf der Grundlage der oberen Begrenzungslinie und eines Schnittpunkts der zweiten Linie und der dritten Linie; und

Bestimmen der konkaven Anpassungskurve auf der Grundlage der bestimmten Form des Polygonbereichs, so dass die zweite Linie und die dritte Linie die Tangenten der Anpassungskurve am zweiten bzw. dritten Betriebspunkt sind.

14. Sendevorrichtung (110) nach Anspruch 13, wobei die Sendevorrichtung (110) veranlasst wird, die konkave Anpassungskurve zu bestimmen durch mindestens eines der Folgenden:

Bestimmen der konkaven Anpassungskurve durch eine quadratische Bézier-Kurve, die durch ein Trigon gesteuert wird, das durch die zweite Linie, die dritte Linie und die Linie bestimmt wird, die den zweiten Betriebspunkt und den dritten Betriebspunkt verbindet; oder

Bestimmen der konkaven Anpassungskurve durch eine kubische Bézier-Kurve, die durch ein Quadrangle gesteuert wird, das durch die obere Begrenzungslinie, die zweite Linie, die dritte Linie und die Linie bestimmt wird, die den zweiten Betriebspunkt und den dritten Betriebspunkt verbindet.

15. Sendevorrichtung (110) nach Anspruch 10, wobei die Sendevorrichtung (110) veranlasst wird, den ersten Lagrange-Multiplikator zu bestimmen durch:

Bestimmen eines Schnittpunkts zwischen der konkaven Anpassungskurve und einer Linie, die durch die Gesamtleistungsbeschränkung bestimmt wird; und

Bestimmen des ersten Lagrange-Multiplikators mit einer Ableitung der konkaven Anpassungskurve am Schnittpunkt.

**16.** Sendevorrichtung (110) nach Anspruch 10, wobei die Sendevorrichtung (110) veranlasst wird, die erste optimale diskrete Leistungsverteilung zu bestimmen durch:

Sortieren (410), in nicht absteigender Reihenfolge, von diskreten effektiven Leistungszuweisungen im Kandidatensatz von diskreten effektiven Leistungszuweisungen, der für jeden des Satzes von Unterkanälen verwendet wird;

Unterteilen (420), auf der Grundlage eines durch den ersten Lagrange-Multiplikator bestimmten Schwellenwerts, des sortierten Kandidatensatzes von diskreten effektiven Leistungszuweisungen in einen ersten Unterkanalensatz, einen zweiten Unterkanalensatz und einen dritten Unterkanalensatz;

Bestimmen (430) der optimalen Leistungszuweisung für einen Unterkanal, der zum ersten Unterkanalensatz gehört, durch Zuweisen der minimalen diskreten effektiven Leistungszuweisung im Kandidatensatz;

Bestimmen (440) der optimalen Leistungszuweisung für einen Unterkanal, der zum zweiten Unterkanalensatz gehört, durch Zuweisen der maximalen diskreten effektiven Leistungszuweisung im Kandidatensatz; und

Bestimmen (450) der optimalen Leistungszuweisung für einen Unterkanal, der zum dritten Unterkanalensatz gehört, durch Auswählen einer gewünschten aus zwei diskreten effektiven Leistungszuweisungen, die nahe am Schwellenwert liegen.

**17.** Sendevorrichtung (110) nach Anspruch 10, wobei die Sendevorrichtung (110) ferner veranlasst wird:

zu bestimmen (610) einen ersten Betriebspunkt, der ein erstes Rate-Leistungsbudget-Paar darstellt, bei dem das Leistungsbudget zur Gesamtleistungsbeschränkung tendiert, durch Zusammenfassen der ersten optimalen diskreten Leistungsverteilung und ihrer verursachten Ratenverteilung über den Satz von Unterkanälen, wobei der erste Betriebspunkt *(r(Pnew), Pnew)* durch die folgende Gleichung berechnet werden kann

$$P_{new} = \sum_{l \in S} p_l^*(\lambda_{new})$$

$$r\left(P_{new}\right) = \sum_{l \in S} r_l\left(p_l^*(\lambda_{new})\right)'$$

wobei

$$p_l^*(\lambda_{new}) = \arg \max_{p_l \in A_l, \ l \in S} \sum_{l \in S} r_l\left(p_l\right) - \lambda_{new} \sum_{l \in S} p_l ;$$

zu bestimmen (620), ob ein Leistungswert des ersten Rate-Leistungsbudget-Paars einer von dem Leistungswert des zweiten Rate-Leistungsbudget-Paars, dargestellt durch den zweiten Betriebspunkt, der Gesamtleistungsbeschränkung und dem Leistungswert des dritten Rate-Leistungsbudget-Paars, dargestellt durch den dritten Betriebspunkt, ist;

als Reaktion auf den Fall, dass der Leistungswert des ersten Rate-Leistungsbudget-Paars einer von dem Leistungswert des zweiten Rate-Leistungsbudget-Paars, der Gesamtleistungsbeschränkung und dem Leistungswert des dritten Rate-Leistungsbudget-Paars ist, zu verwenden (630) die erste optimale diskrete Leistungsverteilung für die Datenübertragung über den Satz von Unterkanälen zwischen der Sendevorrichtung und der Empfangsvorrichtung; und

als Reaktion auf den Fall, dass der Leistungswert des ersten Rate-Leistungsbudget-Paars nicht einer von dem Leistungswert des zweiten Rate-Leistungsbudget-Paars, der Gesamtleistungsbeschränkung und dem Leistungswert des dritten Rate-Leistungsbudget-Paars ist,

Aktualisieren (640) der zweiten und dritten Betriebspunkte mit dem ersten Betriebspunkt;

Aktualisieren (650) eines zweiten Lagrange-Multiplikators und eines dritten Lagrange-Multiplikators mit einem äquivalenten Bereich des ersten Lagrange-Multiplikators, wobei der zweite Lagrange-Multiplikator so bestimmt wird, dass der Leistungswert des zweiten Rate-Leistungsbudget-Paars geringer ist als die Gesamtleistungsbeschränkung, wobei der dritte Lagrange-Multiplikator so bestimmt wird, dass der Leistungswert des dritten Rate-Leistungsbudget-Paars größer ist als die Gesamtleistungsbeschränkung, und wobei der äquivalente Bereich des ersten Lagrange-Multiplikators dieselbe erste optimale diskrete Leistungsverteilung für die Datenübertragung und denselben ersten Betriebspunkt verursacht; und

Aktualisieren (660) des ersten Lagrange-Multiplikators und des ersten Betriebspunkts auf der Grundlage der aktualisierten zweiten und dritten Lagrange-Multiplikatoren, wobei beispielsweise die Sendevorrichtung veranlasst wird, den zweiten Lagrange-Multiplikator und den dritten Lagrange-Multiplikator zu aktualisieren durch:

als Reaktion darauf, dass der Leistungswert des ersten Rate-Leistungsbudget-Paars kleiner ist als die Gesamtleistungsbeschränkung, Ersetzen des zweiten Lagrange-Multiplikators durch eine untere Grenze des äquivalenten Bereichs des ersten Lagrange-Multiplikators plus eine beliebig kleine positive Zahl; und als Reaktion darauf, dass der Leistungswert des ersten Rate-Leistungsbudget-Paars größer ist als die Gesamtleistungsbeschränkung, Ersetzen des dritten Lagrange-Multiplikators durch eine obere Grenze des äquivalenten Bereichs des ersten Lagrange-Multiplikators.

18. Sendevorrichtung (110) nach Anspruch 10, wobei die Sendevorrichtung (110) veranlasst wird, den äquivalenten Bereich des ersten Lagrange-Multiplikators zu bestimmen durch:

Sortieren, in nicht absteigender Reihenfolge, von diskreten effektiven Leistungszuweisungen im Kandidatensatz von diskreten effektiven Leistungszuweisungen, der für jeden des Satzes von Unterkanälen verwendet wird; Unterteilen, auf der Grundlage eines durch den ersten Lagrange-Multiplikator bestimmten Schwellenwerts, des sortierten Kandidatensatzes von diskreten effektiven Leistungszuweisungen in einen ersten Unterkanalensatz, einen zweiten Unterkanalensatz und einen dritten Unterkanalensatz; Bestimmen einer ersten unteren Grenze und einer zweiten unteren Grenze aus dem ersten Unterkanalensatz bzw. dem dritten Unterkanalensatz; Bestimmen einer ersten oberen Grenze und einer zweiten oberen Grenze aus dem zweiten Unterkanalensatz bzw. dem dritten Unterkanalensatz; Bestimmen der unteren Grenze des äquivalenten Bereichs des ersten Lagrange-Multiplikators mit dem Maximum der ersten und der zweiten unteren Grenze; und Bestimmen der oberen Grenze des äquivalenten Bereichs des ersten Lagrange-Multiplikators mit dem Minimum der ersten und der zweiten oberen Grenze.

19. Sendevorrichtung (110) nach einem der Ansprüche 10 bis 18, wobei die Sendevorrichtung (110) ein Endgerät ist.

20. Nicht-transitorisches computerlesbares Medium (1100), das Programmanweisungen (1030) umfasst, um eine Vorrichtung zu veranlassen, das Verfahren nach einem der Ansprüche 1 bis 9 durchzuführen.

**Revendications**

1. Procédé de transmission de données, comprenant :

la détermination (210), au niveau d'un dispositif d'émission (110), sur la base d'une contrainte de puissance totale d'un ensemble de sous-canaux entre le dispositif d'émission et un dispositif de réception, d'un gain de canal et d'une puissance de bruit de chacun de l'ensemble de sous-canaux, et d'un ensemble candidat d'attributions de puissance efficaces discrètes utilisé pour chacun de l'ensemble de sous-canaux, d'une région polygonale comprenant un ensemble de points de fonctionnement discrets dont chacun représente une paire débit-budget de puissance déterminée par une distribution de puissance discrète optimale sur l'ensemble de sous-canaux avec un multiplicateur de Lagrange associé ; la détermination (220) d'une courbe d'ajustement concave dans la région polygonale pour prédire l'enveloppe convexe de l'ensemble des points de fonctionnement discrets ; la détermination (230) d'un premier multiplicateur de Lagrange sur la base de la courbe d'ajustement et de la contrainte de puissance totale ; et la détermination (240), sur la base du premier multiplicateur de Lagrange, d'une première distribution de puissance discrète optimale pour la transmission de données sur l'ensemble de sous-canaux.

2. Procédé selon la revendication 1, dans lequel la détermination (210) de la région polygonale comprend :

la détermination (310) d'une ligne à borne supérieure par une allocation de puissance continue optimale sous la contrainte de puissance totale de sorte que tous les points de fonctionnement possibles se situent au-dessous de la ligne à borne supérieure sur le plan débit-budget de puissance ; la détermination (320) d'une deuxième ligne sur la base d'un deuxième multiplicateur de Lagrange et d'un deuxième point de fonctionnement représentant une deuxième paire débit-budget de puissance, le deuxième point de fonctionnement étant déterminé sur la base du deuxième multiplicateur de Lagrange, et le deuxième multiplicateur de Lagrange étant déterminé de sorte que la valeur de puissance de la deuxième paire débit-budget de puissance soit inférieure à la contrainte de puissance totale ;

la détermination (330) d'une troisième ligne sur la base d'un troisième multiplicateur de Lagrange et d'un troisième point de fonctionnement représentant une troisième paire débit-budget de puissance, le troisième point de fonctionnement étant déterminé sur la base du troisième multiplicateur de Lagrange, et le troisième multiplicateur de Lagrange étant déterminé de sorte que la valeur de puissance de la troisième paire débit-budget de puissance soit supérieure à la contrainte de puissance totale ; et

la détermination (340) d'une région polygonale convexe délimitée par la ligne à borne supérieure, la deuxième ligne, la troisième ligne, et une ligne reliant le deuxième point de fonctionnement et le troisième point de fonctionnement, dans laquelle par exemple la deuxième ligne est déterminée par une ligne passant par le deuxième point de fonctionnement dont la pente est égale au deuxième multiplicateur de Lagrange, et la troisième ligne est déterminée par une ligne passant par le troisième point de fonctionnement dont la pente est égale au troisième multiplicateur de Lagrange.

3. Procédé selon la revendication 2, comprenant en outre la détermination des deuxième et troisième multiplicateurs de Lagrange par :

le tri (410), dans l'ordre non décroissant, des attributions de puissance efficaces discrètes dans l'ensemble candidat d'attributions de puissance efficaces discrètes utilisé pour chacun de l'ensemble de sous-canaux ;

la détermination, pour chacun de l'ensemble de sous-canaux, d'une première valeur de variation de débit relative aux deux plus petites attributions de puissance efficaces discrètes pour chacun de l'ensemble de sous-canaux ;

la détermination du deuxième multiplicateur de Lagrange avec la valeur maximale de la première valeur de variation de débit parmi l'ensemble de sous-canaux ;

la détermination, pour chacun de l'ensemble de sous-canaux, d'une deuxième valeur de variation de débit relative aux deux plus grandes attributions de puissance efficaces discrètes pour chacun de l'ensemble de sous-canaux ; et

la détermination du troisième multiplicateur de Lagrange avec la valeur minimale de la deuxième valeur de variation de débit parmi l'ensemble de sous-canaux.

4. Procédé selon la revendication 2, dans lequel la détermination (220) de la courbe d'ajustement concave comprend :

la détermination de la forme de la région polygonale sur la base de la ligne à borne supérieure et d'un point d'intersection de la deuxième ligne et de la troisième ligne ; et

la détermination de la courbe d'ajustement concave sur la base de la forme déterminée de la région polygonale de sorte que la deuxième ligne et la troisième ligne soient les tangentes de la courbe d'ajustement aux deuxième et troisième points de fonctionnement, respectivement.

5. Procédé selon la revendication 4, dans lequel la détermination (220) de la courbe d'ajustement concave comprend au moins l'un des éléments suivants :

la détermination de la courbe d'ajustement concave par une courbe de Bézier quadratique contrôlée par un trigone déterminé par la deuxième ligne, la troisième ligne et la ligne reliant le deuxième point de fonctionnement et le troisième point de fonctionnement ; ou

la détermination de la courbe d'ajustement concave par une courbe de Bézier cubique contrôlée par un quadrangle déterminé par la ligne à borne supérieure, la deuxième ligne, la troisième ligne et la ligne reliant le deuxième point de fonctionnement et le troisième point de fonctionnement.

6. Procédé selon la revendication 1, dans lequel la détermination (230) du premier multiplicateur de Lagrange comprend :

la détermination d'un point d'intersection entre la courbe d'ajustement concave et une ligne déterminée par la contrainte de puissance totale ; et

la détermination du premier multiplicateur de Lagrange avec une dérivée de la courbe d'ajustement concave au point d'intersection.

7. Procédé selon la revendication 1, dans lequel la détermination (240) de la première distribution de puissance discrète optimale comprend :

le tri, dans l'ordre non décroissant, des attributions de puissance efficaces discrètes dans l'ensemble candidat d'attributions de puissance efficaces discrètes utilisé pour chacun de l'ensemble de sous-canaux ;

la division, sur la base d'un seuil déterminé par le premier multiplicateur de Lagrange, de l'ensemble candidat trié d'attributions de puissance efficaces discrètes en un premier ensemble de sous-canaux, un deuxième ensemble de sous-canaux, et un troisième ensemble de sous-canaux ;

la détermination de l'attribution de puissance optimale, pour un sous-canal appartenant au premier ensemble de sous-canaux, en attribuant l'attribution de puissance efficace discrète minimale dans l'ensemble candidat ;

la détermination de l'attribution de puissance optimale, pour un sous-canal appartenant au deuxième ensemble de sous-canaux, en attribuant l'attribution de puissance efficace discrète maximale dans l'ensemble candidat ; et

la détermination de l'attribution de puissance optimale, pour un sous-canal appartenant au troisième ensemble de sous-canaux, en choisissant une attribution souhaitée parmi deux attributions de puissance efficaces discrètes qui sont proches du seuil.

8. Procédé selon la revendication 1, comprenant en outre :

la détermination (610) d'un premier point de fonctionnement ($r$(Pnew), Pnew) représentant une première paire débit-budget de puissance où le budget de puissance tend vers la contrainte de puissance totale en résumant la première distribution de puissance discrète optimale et sa distribution de débit causée à travers l'ensemble de sous-canaux, dans lequel le premier point de fonctionnement ($r$(Pnew), Pnew) peut être calculé par l'équation suivante

$$P_{new} = \sum_{l \in S} p_l^*(\lambda_{new})$$

$$r\left(P_{new}\right) = \sum_{l \in S} r_l\left(p_l^*(\lambda_{new})\right)^,$$

où

$$p_l^*(\lambda_{new}) = \arg\max_{p_l \in A_l,\ l \in S} \sum_{l \in S} r_l\left(p_l\right) - \lambda_{new} \sum_{l \in S} p_l \ ;$$

la détermination (620) si une valeur de puissance de la première paire débit-budget de puissance est l'une de la valeur de puissance de la deuxième paire débit-budget de puissance représentée par le deuxième point de fonctionnement, la contrainte de puissance totale, et la valeur de puissance de la troisième paire débit-budget de puissance représentée par le troisième point de fonctionnement ;

en réponse au cas où la valeur de puissance de la première paire débit-budget de puissance est l'une de la valeur de puissance de la deuxième paire débit-budget de puissance, la contrainte de puissance totale, et la valeur de puissance de la troisième paire débit-budget de puissance, l'utilisation (630) de la première distribution de puissance discrète optimale pour la transmission de données sur l'ensemble de sous-canaux entre le dispositif d'émission et le dispositif de réception ; et

en réponse au cas où la valeur de puissance de la première paire débit-budget de puissance n'est pas l'une de la valeur de puissance de la deuxième paire débit-budget de puissance, la contrainte de puissance totale, et la valeur de puissance de la troisième paire débit-budget de puissance,

la mise à jour (640) des deuxième et troisième points de fonctionnement avec le premier point de fonctionnement ;

la mise à jour (650) d'un deuxième multiplicateur de Lagrange et d'un troisième multiplicateur de Lagrange avec une plage équivalente du premier multiplicateur de Lagrange, le deuxième multiplicateur de Lagrange étant déterminé de sorte que la valeur de puissance de la deuxième paire débit-budget de puissance soit inférieure à la contrainte de puissance totale, le troisième multiplicateur de Lagrange étant déterminé de sorte que la valeur de puissance de la troisième paire débit-budget de puissance soit supérieure à la contrainte de puissance totale, et la plage équivalente du premier multiplicateur de Lagrange causant la même première distribution de puissance discrète optimale pour la transmission de données et le même premier point de fonctionnement ; et

la mise à jour (660) du premier multiplicateur de Lagrange et du premier point de fonctionnement sur la base des deuxième et troisième multiplicateurs de Lagrange mis à jour, dans lequel par exemple la mise à jour du deuxième multiplicateur de Lagrange et du troisième multiplicateur de Lagrange comprend :

en réponse à la valeur de puissance de la première paire débit-budget de puissance inférieure à la contrainte de puissance totale, le remplacement du deuxième multiplicateur de Lagrange par une borne inférieure de la plage équivalente du premier multiplicateur de Lagrange plus un petit nombre positif arbitraire ; et
en réponse à la valeur de puissance de la première paire débit-budget de puissance supérieure à la contrainte de puissance totale, le remplacement du troisième multiplicateur de Lagrange par une borne supérieure de la plage équivalente du premier multiplicateur de Lagrange.

9. Procédé selon la revendication 8, dans lequel la détermination de la plage équivalente du premier multiplicateur de Lagrange comprend :

le tri (710), dans l'ordre non décroissant, des attributions de puissance efficaces discrètes dans l'ensemble candidat d'attributions de puissance efficaces discrètes utilisé pour chacun de l'ensemble de sous-canaux ;
la division (720), sur la base d'un seuil déterminé par le premier multiplicateur de Lagrange, de l'ensemble candidat trié d'attributions de puissance efficaces discrètes en un premier ensemble de sous-canaux, un deuxième ensemble de sous-canaux, et un troisième ensemble de sous-canaux ;
la détermination (730) d'une première borne inférieure et d'une deuxième borne inférieure à partir du premier ensemble de sous-canaux et du troisième ensemble de sous-canaux, respectivement ;
la détermination (740) d'une première borne supérieure et d'une deuxième borne supérieure à partir du deuxième ensemble de sous-canaux et du troisième ensemble de sous-canaux, respectivement ;
la détermination (750) de la borne inférieure de la plage équivalente du premier multiplicateur de Lagrange avec le maximum des première et deuxième bornes inférieures ; et
la détermination (760) de la borne supérieure de la plage équivalente du premier multiplicateur de Lagrange avec le minimum des première et deuxième bornes supérieures.

10. Dispositif d'émission (110), comprenant :

au moins un processeur (1010) ; et
au moins une mémoire (1020) incluant des codes de programme informatique (1030) ;
la au moins une mémoire (1020) et les codes de programme informatique (1030) étant configurés pour, avec le au moins un processeur (1010), amener le dispositif d'émission (110) à :

déterminer (210), sur la base d'une contrainte de puissance totale d'un ensemble de sous-canaux entre le dispositif d'émission et un dispositif de réception, d'un gain de canal et d'une puissance de bruit de chacun de l'ensemble de sous-canaux, et d'un ensemble candidat d'attributions de puissance efficaces discrètes utilisé pour chacun de l'ensemble de sous-canaux, une région polygonale comprenant un ensemble de points de fonctionnement discrets dont chacun représente une paire débit-budget de puissance déterminée par une distribution de puissance discrète optimale sur l'ensemble de sous-canaux avec un multiplicateur de Lagrange associé ;
déterminer (220) une courbe d'ajustement concave dans la région polygonale pour prédire l'enveloppe convexe de l'ensemble des points de fonctionnement discrets ;
déterminer (230) un premier multiplicateur de Lagrange sur la base de la courbe d'ajustement et de la contrainte de puissance totale ; et
déterminer (240), sur la base du premier multiplicateur de Lagrange, une première distribution de puissance discrète optimale pour la transmission de données sur l'ensemble de sous-canaux.

11. Dispositif d'émission (110) selon la revendication 10, dans lequel le dispositif d'émission (110) est amené à déterminer la région polygonale par :

la détermination (310) d'une ligne à borne supérieure par une allocation de puissance continue optimale sous la contrainte de puissance totale de sorte que tous les points de fonctionnement possibles se situent au-dessous de la ligne à borne supérieure sur le plan débit-budget de puissance ;
la détermination (320) d'une deuxième ligne sur la base d'un deuxième multiplicateur de Lagrange et d'un deuxième point de fonctionnement représentant une deuxième paire débit-budget de puissance, le deuxième point de fonctionnement étant déterminé sur la base du deuxième multiplicateur de Lagrange, et le deuxième multiplicateur de Lagrange étant déterminé de sorte que la valeur de puissance de la deuxième paire débit-

**EP 4 055 912 B1**

budget de puissance soit inférieure à la contrainte de puissance totale ;

la détermination (330) d'une troisième ligne sur la base d'un troisième multiplicateur de Lagrange et d'un troisième point de fonctionnement représentant une troisième paire débit-budget de puissance, le troisième point de fonctionnement étant déterminé sur la base du troisième multiplicateur de Lagrange, et le troisième multiplicateur de Lagrange étant déterminé de sorte que la valeur de puissance de la troisième paire débit-budget de puissance soit supérieure à la contrainte de puissance totale ; et

la détermination (340) d'une région polygonale convexe délimitée par la ligne à borne supérieure, la deuxième ligne, la troisième ligne, et une ligne reliant le deuxième point de fonctionnement et le troisième point de fonctionnement, dans laquelle par exemple la deuxième ligne est déterminée par une ligne passant par le deuxième point de fonctionnement dont la pente est égale au deuxième multiplicateur de Lagrange, et la troisième ligne est déterminée par une ligne passant par le troisième point de fonctionnement dont la pente est égale au troisième multiplicateur de Lagrange.

12. Dispositif d'émission (110) selon la revendication 11, dans lequel le dispositif d'émission (110) est en outre amené à déterminer les deuxième et troisième multiplicateurs de Lagrange par :

le tri, dans l'ordre non décroissant, des attributions de puissance efficaces discrètes dans l'ensemble candidat d'attributions de puissance efficaces discrètes utilisé pour chacun de l'ensemble de sous-canaux ;

la détermination, pour chacun de l'ensemble de sous-canaux, d'une première valeur de variation de débit relative aux deux plus petites attributions de puissance efficaces discrètes pour chacun de l'ensemble de sous-canaux ;

la détermination du deuxième multiplicateur de Lagrange avec la valeur maximale de la première valeur de variation de débit parmi l'ensemble de sous-canaux ;

la détermination, pour chacun de l'ensemble de sous-canaux, d'une deuxième valeur de variation de débit relative aux deux plus grandes attributions de puissance efficaces discrètes pour chacun de l'ensemble de sous-canaux ; et

la détermination du troisième multiplicateur de Lagrange avec la valeur minimale de la deuxième valeur de variation de débit parmi l'ensemble de sous-canaux.

13. Dispositif d'émission (110) selon la revendication 11, dans lequel le dispositif d'émission (110) est amené à déterminer la courbe d'ajustement concave par :

la détermination de la forme de la région polygonale sur la base de la ligne à borne supérieure et d'un point d'intersection de la deuxième ligne et de la troisième ligne ; et

la détermination de la courbe d'ajustement concave sur la base de la forme déterminée de la région polygonale de sorte que la deuxième ligne et la troisième ligne soient les tangentes de la courbe d'ajustement aux deuxième et troisième points de fonctionnement, respectivement.

14. Dispositif d'émission (110) selon la revendication 13, dans lequel le dispositif d'émission (110) est amené à déterminer la courbe d'ajustement concave par au moins l'un des éléments suivants :

la détermination de la courbe d'ajustement concave par une courbe de Bézier quadratique contrôlée par un trigone déterminé par la deuxième ligne, la troisième ligne et la ligne reliant le deuxième point de fonctionnement et le troisième point de fonctionnement ; ou

la détermination de la courbe d'ajustement concave par une courbe de Bézier cubique contrôlée par un quadrangle déterminé par la ligne à borne supérieure, la deuxième ligne, la troisième ligne et la ligne reliant le deuxième point de fonctionnement et le troisième point de fonctionnement.

15. Dispositif d'émission (110) selon la revendication 10, dans lequel le dispositif d'émission (110) est amené à déterminer le premier multiplicateur de Lagrange par :

la détermination d'un point d'intersection entre la courbe d'ajustement concave et une ligne déterminée par la contrainte de puissance totale ; et

la détermination du premier multiplicateur de Lagrange avec une dérivée de la courbe d'ajustement concave au point d'intersection.

16. Dispositif d'émission (110) selon la revendication 10, dans lequel le dispositif d'émission (110) est amené à déterminer la première distribution de puissance discrète optimale par :

**33**

le tri (410), dans l'ordre non décroissant, des attributions de puissance efficaces discrètes dans l'ensemble candidat d'attributions de puissance efficaces discrètes utilisé pour chacun de l'ensemble de sous-canaux ;

la division (420), sur la base d'un seuil déterminé par le premier multiplicateur de Lagrange, de l'ensemble candidat trié d'attributions de puissance efficaces discrètes en un premier ensemble de sous-canaux, un deuxième ensemble de sous-canaux, et un troisième ensemble de sous-canaux ;

la détermination (430) de l'attribution de puissance optimale, pour un sous-canal appartenant au premier ensemble de sous-canaux, en attribuant l'attribution de puissance efficace discrète minimale dans l'ensemble candidat ;

la détermination (440) de l'attribution de puissance optimale, pour un sous-canal appartenant au deuxième ensemble de sous-canaux, en attribuant l'attribution de puissance efficace discrète maximale dans l'ensemble candidat ; et

la détermination (450) de l'attribution de puissance optimale, pour un sous-canal appartenant au troisième ensemble de sous-canaux, en choisissant une attribution souhaitée parmi deux attributions de puissance efficaces discrètes qui sont proches du seuil.

17. Dispositif d'émission (110) selon la revendication 10, dans lequel le dispositif d'émission (110) est en outre amené à :

déterminer (610) un premier point de fonctionnement représentant une première paire débit-budget de puissance où le budget de puissance tend vers la contrainte de puissance totale en résumant la première distribution de puissance discrète optimale et sa distribution de débit causée à travers l'ensemble de sous-canaux, dans lequel le premier point de fonctionnement ($r(Pnew)$, $Pnew$) peut être calculé par l'équation suivante

$$P_{new} = \sum_{l \in S} p_l^*(\lambda_{new})$$

$$r(P_{new}) = \sum_{l \in S} r_l \left( p_l^*(\lambda_{new}) \right)'$$

où

$$p_l^*(\lambda_{new}) = \arg \max_{p_l \in A_l, \ l \in S} \sum_{l \in S} r_l(p_l) - \lambda_{new} \sum_{l \in S} p_l \ ;$$

déterminer (620) si une valeur de puissance de la première paire débit-budget de puissance est l'une de la valeur de puissance de la deuxième paire débit-budget de puissance représentée par le deuxième point de fonctionnement, la contrainte de puissance totale, et la valeur de puissance de la troisième paire débit-budget de puissance représentée par le troisième point de fonctionnement ;

en réponse au cas où la valeur de puissance de la première paire débit-budget de puissance est l'une de la valeur de puissance de la deuxième paire débit-budget de puissance, la contrainte de puissance totale, et la valeur de puissance de la troisième paire débit-budget de puissance, utiliser (630) la première distribution de puissance discrète optimale pour la transmission de données sur l'ensemble de sous-canaux entre le dispositif d'émission et le dispositif de réception ; et

en réponse au cas où la valeur de puissance de la première paire débit-budget de puissance n'est pas l'une de la valeur de puissance de la deuxième paire débit-budget de puissance, la contrainte de puissance totale, et la valeur de puissance de la troisième paire débit-budget de puissance,

mettre à jour (640) les deuxième et troisième points de fonctionnement avec le premier point de fonctionnement ;

mettre à jour (650) un deuxième multiplicateur de Lagrange et un troisième multiplicateur de Lagrange avec une plage équivalente du premier multiplicateur de Lagrange, le deuxième multiplicateur de Lagrange étant déterminé de sorte que la valeur de puissance de la deuxième paire débit-budget de puissance soit inférieure à la contrainte de puissance totale, le troisième multiplicateur de Lagrange étant déterminé de sorte que la valeur de puissance de la troisième paire débit-budget de puissance soit supérieure à la contrainte de puissance totale, et la plage équivalente du premier multiplicateur de Lagrange causant la même première distribution de puissance discrète optimale pour la transmission de données et le même premier point de fonctionnement ; et

mettre à jour (660) le premier multiplicateur de Lagrange et le premier point de fonctionnement sur la base des deuxième et troisième multiplicateurs de Lagrange mis à jour, dans lequel par exemple le dispositif d'émission est amené à mettre à jour le deuxième multiplicateur de Lagrange et le troisième multiplicateur de Lagrange par :

en réponse à la valeur de puissance de la première paire débit-budget de puissance inférieure à la contrainte de puissance totale, le remplacement du deuxième multiplicateur de Lagrange par une borne inférieure de la plage équivalente du premier multiplicateur de Lagrange plus un petit nombre positif arbitraire ; et
en réponse à la valeur de puissance de la première paire débit-budget de puissance supérieure à la contrainte de puissance totale, le remplacement du troisième multiplicateur de Lagrange par une borne supérieure de la plage équivalente du premier multiplicateur de Lagrange.

18. Dispositif émetteur (110) selon la revendication 10, dans lequel le dispositif émetteur (110) est amené à déterminer la plage équivalente du premier multiplicateur de Lagrange par :

le tri, dans l'ordre non décroissant, des attributions de puissance effective discrète dans l'ensemble candidat d'attributions de puissance effective discrète utilisé pour chacun de l'ensemble de sous-canaux ;
la division, sur la base d'un seuil déterminé par le premier multiplicateur de Lagrange, de l'ensemble candidat trié d'attributions de puissance effective discrète en un premier ensemble de sous-canaux, un deuxième ensemble de sous-canaux, et un troisième ensemble de sous-canaux ;
la détermination d'une première borne inférieure et d'une deuxième borne inférieure à partir du premier ensemble de sous-canaux et du troisième ensemble de sous-canaux, respectivement ;
la détermination d'une première borne supérieure et d'une deuxième borne supérieure à partir du deuxième ensemble de sous-canaux et du troisième ensemble de sous-canaux, respectivement ;
la détermination de la borne inférieure de la plage équivalente du premier multiplicateur de Lagrange avec le maximum des première et deuxième bornes inférieures ; et
la détermination de la borne supérieure de la plage équivalente du premier multiplicateur de Lagrange avec le minimum des première et deuxième bornes supérieures.

19. Dispositif d'émission (110) selon l'une quelconque des revendications 10 à 18, dans lequel le dispositif d'émission (110) est un dispositif terminal.

20. Support lisible par ordinateur non transitoire (1100) comprenant des instructions de programme (1030) pour amener un appareil à exécuter le procédé selon l'une quelconque des revendications 1 à 9.

Fig. 1

200

┌─────────────────────────────────────────────────────────┐ ╌ 210
│                                                         │
│   DETERMINE, AT A TRANSMITTING DEVICE,  A POLYGON       │
│  REGION COMPRISING A SET OF DISCRETE OPERATING POINTS   │
│                                                         │
└─────────────────────────────────────────────────────────┘
                            │
                            ▼
┌─────────────────────────────────────────────────────────┐ ╌ 220
│                                                         │
│   DETERMINE A CONCAVE FITTING CURVE IN THE POLYGON      │
│  REGION TO PREDICT THE CONVEX HULL OF THE SET OF THE    │
│              DISCRETE OPERATING POINTS                   │
│                                                         │
└─────────────────────────────────────────────────────────┘
                            │
                            ▼
┌─────────────────────────────────────────────────────────┐ ╌ 230
│                                                         │
│  DETERMINE A FIRST LAGRANGE MULTIPLIER BASED ON THE     │
│     FITTING CURVE AND THE TOTAL POWER CONSTRAINT        │
│                                                         │
└─────────────────────────────────────────────────────────┘
                            │
                            ▼
┌─────────────────────────────────────────────────────────┐ ╌ 240
│                                                         │
│  DETERMINE, BASED ON THE FIRST LAGRANGE MULTIPLIER, A   │
│  FIRST OPTIMAL DISCRETE POWER DISTRIBUTION FOR THE      │
│   DATA TRANSMISSION OVER THE SET OF SUBCHANNELS         │
│                                                         │
└─────────────────────────────────────────────────────────┘

Fig. 2

300

310

DETERMINE AN UPPER-BOUNDED LINE

320

DETERMINE A SECOND LINE

330

DETERMINE A THIRD LINE

340

DETERMINE A CONVEX POLYGON REGION

Fig. 3

400 ⟍

┌─────────────────────────────────────────────────┐ ⟋410
│ SORT, IN THE NONDECREASING ORDER, DISCRETE EFFECTIVE │
│       POWER ASSIGNMENTS IN THE CANDIDATE SET       │
└─────────────────────────────────────────────────┘
                         │
                         ▼
┌─────────────────────────────────────────────────┐ ⟋420
│ DIVIDE THE SORTED CANDIDATE SET OF DISCRETE EFFECTIVE │
│   POWER ASSIGNMENTS INTO FIRST, SECOND AND THIRD    │
│                SUBCHANNEL SETS                     │
└─────────────────────────────────────────────────┘
                         │
                         ▼
┌─────────────────────────────────────────────────┐ ⟋430
│   DETERMINE THE OPTIMAL POWER ASSIGNMENT, FOR A    │
│ SUBCHANNEL BELONG TO THE FIRST SUBCHANNEL SET, BY  │
│   ASSIGNING THE MINIMUM DISCRETE EFFECTIVE POWER   │
│                   ASSIGNMENT                       │
└─────────────────────────────────────────────────┘
                         │
                         ▼
┌─────────────────────────────────────────────────┐ ⟋440
│   DETERMINE THE OPTIMAL POWER ASSIGNMENT, FOR A    │
│ SUBCHANNEL BELONG TO THE SECOND SUBCHANNEL SET, BY │
│   ASSIGNING THE MAXIMUM DISCRETE EFFECTIVE POWER   │
│                   ASSIGNMENT                       │
└─────────────────────────────────────────────────┘
                         │
                         ▼
┌─────────────────────────────────────────────────┐ ⟋450
│   DETERMINE THE OPTIMAL POWER ASSIGNMENT, FOR A    │
│ SUBCHANNEL BELONG TO THE THIRD SUBCHANNEL SET, BY  │
│ CHOOSING A DESIRED ONE FROM TWO DISCRETE EFFECTIVE │
│ POWER ASSIGNMENTS THAT ARE CLOSE TO THE THRESHOLD  │
└─────────────────────────────────────────────────┘

Fig. 4

Fig. 5

DETERMINE A FIRST OPERATING POINT REPRESENTING A FIRST RATE-POWER BUDGET PAIR — 610

600

IS A POWER VALUE OF THE FIRST RATE-POWER BUDGET PAIR NOT ONE OF THE POWER VALUE OF THE SECOND RATE-POWER BUDGET PAIR, THE TOTAL POWER CONSTRAINT, AND THE POWER VALUE OF THE THIRD RATE-POWER BUDGET PAIR? — 620

NO

UPDATE THE SECOND AND THIRD OPERATING POINTS — 640

UPDATE A SECOND LAGRANGE MULTIPLIER AND A THIRD LAGRANGE MULTIPLIER — 650

UPDATE THE FIRST LAGRANGE MULTIPLIER AND THE FIRST OPERATING POINT — 660

YES

USE THE FIRST OPTIMAL DISCRETE POWER DISTRIBUTION FOR THE DATA TRANSMISSION — 630

Fig. 6

700

710

SORT, IN THE NONDECREASING ORDER, DISCRETE EFFECTIVE
POWER ASSIGNMENTS IN THE CANDIDATE SET

720

DIVIDE THE SORTED CANDIDATE SET OF DISCRETE EFFECTIVE
POWER ASSIGNMENTS INTO FIRST, SECOND AND THIRD
SUBCHANNEL SETS

730

DETERMINE A FIRST LOWER BOUND AND A SECOND LOWER
BOUND FROM THE FIRST SUBCHANNEL SET AND THE THIRD
SUBCHANNEL SET, RESPECTIVELY

740

DETERMINE A FIRST UPPER BOUND AND A SECOND UPPER
BOUND FROM THE SECOND SUBCHANNEL SET AND THE THIRD
SUBCHANNEL SET, RESPECTIVELY

750

DETERMINE THE LOWER BOUND OF THE EQUIVALENT RANGE
OF THE FIRST LAGRANGE MULTIPLIER WITH THE MAXIMUM OF
THE FIRST AND THE SECOND LOWER BOUNDS

760

DETERMINE THE UPPER BOUND OF THE EQUIVALENT RANGE
OF THE FIRST LAGRANGE MULTIPLIER WITH THE MINIMUM OF
THE FIRST AND THE SECOND UPPER BOUNDS

Fig. 7

**800**

Fig. 8

Fig. 9

1000

1040

COMMMUNICATION
MODULE

1010

PROCESSOR

1020
1022
MEMORY
RAM

1024
ROM
1030

Fig. 10

1030

1100

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6400773 B1

- US 7310301 B1

**Non-patent literature cited in the description**

- Coordinated multi-point transmission of MIMO-OFDM system with per-antenna power constraints. **CHIH-YU HSU et al.** GLOBAL COMMUNICATIONS CONFERENCE (GLOBECOM), 2012 IEEE. IEEE, 03 December 2012, 4886-4892

- Section 5.6 Quadratic and Cubic Equations. **W. H.** ; **TEUKOLSKY, S. A.** ; **VETTERLING, W. T.** ; **FLANNERY, B. P.** Numerical Recipes: The Art of Scientific Computing. Cambridge University Press, 2007